(19) Europäisches Patentamt
European Patent Office
Office européen des brevets

(11) EP 1 746 613 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**23.03.2016 Patentblatt 2016/12**

(45) Hinweis auf die Patenterteilung:
**08.10.2008 Patentblatt 2008/41**

(21) Anmeldenummer: **06014379.9**

(22) Anmeldetag: **11.07.2006**

(51) Int Cl.:
***H01G 9/15*** *(2006.01)*

(54) **Elektrolytkondensatoren mit polymerer Aussenschicht und Verfahren zu ihrer Herstellung**

Electrolytic capacitors having polymeric outer layer and process of their production

Condensateurs électrolytiques avec couche extérieure en polymères et leur procédé de production

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.07.2005 DE 102005033839**

(43) Veröffentlichungstag der Anmeldung:
**24.01.2007 Patentblatt 2007/04**

(73) Patentinhaber: **H.C. Starck GmbH**
**38642 Goslar (DE)**

(72) Erfinder:
- **Merker, Udo, Dr.**
  **51105 Köln (DE)**
- **Wussow, Klaus, Dr.**
  **57250 Netphen (DE)**

(74) Vertreter: **Herzog, Fiesser & Partner**
**Patentanwälte PartG mbB**
**Immermannstrasse 40**
**40210 Düsseldorf (DE)**

(56) Entgegenhaltungen:
**EP-A2- 0 825 626**
**EP-A2- 1 524 678**
**WO-A-01/16972**
**JP-A- 2001 307 958**

EP 1 746 613 B2

## Beschreibung

Die Erfindung betrifft ein Verfahren zur Herstellung von Elektrolytkondensatoren mit niedrigem äquivalenten Serienwiderstand und niedrigem Reststrom, die aus einem Feststoffelektrolyten aus leitfähigen Polymeren und einer äußeren Schicht enthaltend leitfähige Polymere bestehen, nach diesem Verfahren hergestellte Elektrolytkondensatoren sowie die Verwendung solcher Elektrolytkondensatoren.

Ein handelsüblicher Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode (Kontaktierung), wie z.B. einer Silberschicht, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche eine sehr hohe Kapazitätsdichte, d.h. eine hohe elektrische Kapazität auf kleinem Raum, erzielen lässt.

Besonders geeignet als Feststoffelektrolyte sind aufgrund ihrer hohen elektrischen Leitfähigkeit $\pi$-konjugierte Polymere. $\pi$-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte $\pi$-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form eine sehr hohe Leitfähigkeit aufweist.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-A- 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Neben einem niedrigen ESR erfordern moderne Feststoffelektrolytkondensatoren einen niedrigen Reststrom und eine gute Stabilität gegenüber externen Belastungen. Insbesondere während des Herstellungsprozesses treten bei der Verkapselung der Kondensatoranoden hohe mechanische Belastungen auf, die den Reststrom der Kondensatoranode stark erhöhen können.

Stabilität gegenüber solchen Belastungen und damit ein geringer Reststrom lassen sich vor allem durch eine ca. 5-50 $\mu$m dicke Außenschicht aus leitfähigen Polymeren auf der Kondensatoranode erzielen. Eine solche Schicht dient als mechanischer Puffer zwischen der Kondensatoranode und der kathodenseitigen Kontaktierung. Dadurch wird verhindert, dass z.B. die Silberschicht (Kontaktierung) bei mechanischer Belastung mit dem Dielektrikum in direkten Kontakt kommt oder dieses beschädigt und sich dadurch der Reststrom des Kondensators erhöht. Die leitfähige polymere Außenschicht selbst sollte ein so genanntes Selbstheilungsverhalten aufweisen: Kleinere Defekte im Dielektrikum an der äußeren Anodenoberfläche, die trotz der Pufferwirkung auftreten, werden dadurch elektrisch isoliert, dass die Leitfähigkeit der Außenschicht an der Defektstelle durch den elektrischen Strom zerstört wird.

Die Bildung einer dicken polymeren Außenschicht mittels einer in-situ Polymerisation ist sehr schwierig. Die Schichtbildung bedarf dabei sehr vieler Beschichtungszyklen. Durch die große Anzahl an Beschichtungszyklen wird die Außenschicht sehr inhomogen, insbesondere die Kanten der Kondensatoranode werden oftmals unzureichend belegt. Die japanische Patentanmeldung JP-A 2003-188052 beschreibt, dass eine homogene Kantenbelegung eine aufwendige Abstimmung der Prozessparameter erfordert. Dies macht den Herstellungsprozess jedoch sehr anfällig gegenüber Störungen. Ein Zusatz von Bindermaterialien zum schnelleren Schichtaufbau ist ebenfalls schwierig, da die Bindermaterialien die oxidative in-situ-Polymerisation behindern. Zudem muss die in-situ polymerisierte Schicht in der Regel durch Waschen von Restsalzen befreit werden, wodurch Löcher in der Polymerschicht entstehen.

Eine dichte elektrisch leitfähige Außenschicht mit guter Kantenbelegung kann durch elektrochemische Polymerisation erreicht werden. Die elektrochemische Polymerisation erfordert jedoch, dass zunächst ein leitfähiger Film auf der isolierenden Oxidschicht der Kondensatoranode abgeschieden wird und diese Schicht dann für jeden einzelnen Kondensator elektrisch kontaktiert wird. Diese Kontaktierung ist in der Massenfertigung sehr aufwendig und kann die Oxidschicht beschädigen.

Leitfähige Außenschichten auf Kondensatoren lassen sich auch dadurch herstellen, dass man ein Pulver eines

leitfähigen Polymers mit einem Binder vermischt und diese Mischung auf einen Kondensatorkörper aufbringt. Hohe Kontaktwiderstände zwischen den einzelnen Pulverteilchen führen dabei jedoch zu einem zu hohen elektrischen Widerstand, so dass sich keine Feststoffelektrolytkondensatoren mit niedrigem ESR herstellen lassen.

In EP-A-637043 wird durch den Zusatz von leitfähigen Pulvern die Rauhigkeit einer durch chemische in-situ Polymerisation erzeugte Außenschicht deutlich erhöht, um so eine bessere Anbindung der äußeren Graphitschicht an den Polymerfilm zu ermöglichen und damit niedrigere ESR Werte und Verlustfaktoren zu erzielen. Nachteilig an diesem Verfahren istjedoch, dass die polymere Außenschichtsehrrauh wird (Rauhigkeit 10-50 µm). Da die gesamte Schichtdicke der polymeren Außenschicht nicht dicker als 5-50 µm sein sollte, um einen niedrigen ESR zu erreichen, führt eine solch große Rauhigkeit dazu, dass die Außenschicht lokal sehr dünn ist und somit hohe Restströme auftreten. Zudem kann es an den rauen Stellen der polymeren Außenschicht zu Spannungsspitzen und elektrischen Durchschlägen kommen.

In den japanischen Patentanmeldungen JP-A 2001-102255 und JP-A 2001-060535 wird zum Schutz des Oxidfilms und der besseren Adhäsion des Feststoffelektrolyten an den Oxidfilm eine Schicht aus Polyethylendioxythiophen/Polystyrolsulfonsäure (PEDT/PSS), auch als Polyethylendioxythiophen/Polystyrolsulfonsäure-Komplex oder PEDT/PSS-Komplex bezeichnet, direkt auf den Oxidfilm aufgebracht. Auf diese Schicht wird dann mittels in-situ Polymerisation bzw. durch Tränkung der Kondensatoranode mit Tetracyanoquinodimethan-Salz-Lösung die äußere Schicht aufgetragen. Diese Methode hat jedoch den Nachteil, dass der PEDT/PSS-Komplex nicht in poröse Anodenkörper mit kleinen Poren eindringt. Dadurch können moderne, hochporöse Anodenmaterialien nicht verwendet werden.

US-P 6,001,281 beschreibt in den Beispielen Kondensatoren mit einem Feststoffelektrolyten aus in-situ hergestelltem Polyethylendioxythiophen (PEDT) und einer äußeren Schicht aus PEDT/PSS-Komplex. Nachteilig an diesen Kondensatoren ist jedoch, dass sie einen hohen ESR von 130 mΩ und größer aufweisen.

In der europäischen Patentanmeldung EP-A-1524678 wird eine polymere Außenschicht durch Aufbringung einer Dispersion enthaltend wenigstens ein polymeres Anion und wenigstens ein gegebenenfalls substituiertes Polyanilin und/oder wenigstens ein Polythiophen mit wiederkehrenden Einheiten der allgemeinen Formel (I), (II) oder wiederkehrenden Einheiten der allgemeinen Formel (I) und (II),

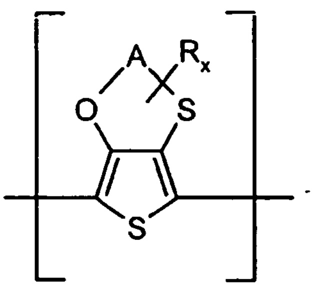 (I)

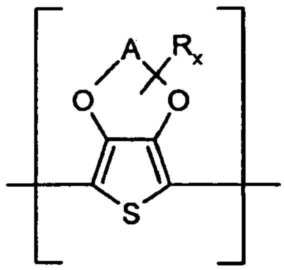 (II)

und einen Binder erzeugt. Obwohl sich mit diesem Verfahren die Kantenbelegung verbessern lässt, lassen sich jedoch hiermit nicht verlässlich reproduzierbar dichte polymere Außenschichten herstellen.

Es besteht somit weiterhin Bedarf an einem verbesserten Verfahren zur Herstellung von Feststoffelektrolytkondensatoren mit niedrigem Äquivalenten Serienwiderstand (ESR), mit dem sich eine dichte polymere Außenschicht mit guter Kantenbelegung einfach und verlässlich reproduzierbar realisieren lässt. Die Aufgabe bestand daher darin, ein solches Verfahren und die damit verbesserten Kondensatoren bereitzustellen.

Überraschend wurde nun gefunden, dass Dispersionen enthaltend Teilchen eines Polyanilins und/oder Polythiophens mit einem Durchmesser kleiner 700 nm einem Binder und Feststoffpartikeln mit einem Durchmesser im Bereich von 0,7 µm bis 20 µm, diese Anforderungen erfüllen.

Die groben Feststoffpartikel mit einem Durchmesser von 0,7 µm bis 20 µm in Dispersionen haben überraschenderweise einen erheblichen Einfluss auf die Bildung von Außenschichten auf Elektrolytkondensatoren. Die Ecken- und Kantenbelegung wird durch diese Partikel wesentlich verbessert. Die Teilchen eines Polyanilins und/oder Polythiophens mit einem Durchmesser kleiner700 nm sind nicht nur für die gute Leitfähigkeit der Schicht und damit den niedrigen ESR des Kondensators verantwortlich, sondern sie glätten gleichzeitig die durch die Feststoffpartikel hervorgerufene Rauhigkeit. Dadurch erhält man dichte und kompakte Schichten mit einergleichmäßigen Dicke, d.h. geringen Rauhigkeit, und somit Kondensatoren mit einem niedrigen Reststrom.

Gegenstand der vorliegenden Erfindung ist daher ein Verfahren zur Herstellung eines Elektrolytkondensators, bei dem auf einen Kondensatorkörper, wenigstens umfassend
einen porösen Elektrodenkörper eines Elektrodenmaterials
ein Dielektrikum, das die Oberfläche des Elektrodenmaterials bedeckt,
einen Feststoffelektrolyten wenigstens enthaltend ein elektrisch leitfähiges Material, bevorzugt ein leitfähiges Polymer, der die Dielektrikumsoberfläche ganz oder teilweise bedeckt,

eine Dispersion a) aufgebracht wird, die wenigstens
Teilchen b) eines elektrisch leitfähigen Polymers, die wenigstens ein gegebenenfalls substituiertes Polyanilin und/oder wenigstens ein Polythiophen mit wiederkehrenden Einheiten der allgemeinen Formel (I) oder der Formel (II) oder wiederkehrenden Einheiten der allgemeinen Formeln (I) und (II) enthalten,

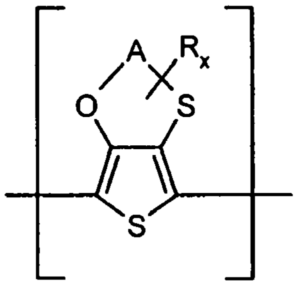
(I)

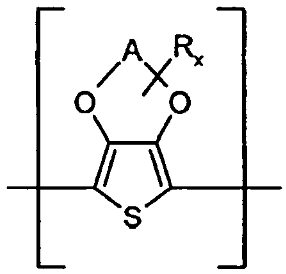
(II)

worin

A für einen gegebenenfalls substituierten $C_1$-$C_5$-Alkylenrest steht,

R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können,
und einen Binder c) und ein Dispersionsmittel d) enthält,
und zur Bildung einer elektrisch leitfähigen polymeren Außenschicht
das Dispersionsmittel d) wenigstens teilweise entfernt wird und/oder der Binder c) ausgehärtet wird,
dadurch gekennzeichnet, dass der Anteil der Teilchen b) des leitfähigen Polymers in der Dispersion a) mit einem Durchmesser kleiner 700 nm einen Feststoffgehalt von mindestens Gew.-% des Feststoffgehalts der Dispersion ausmacht, und dass zusätzlich zu den Komponenten b) bis d) noch Feststoffpartikel e) mit einem Durchmesser im Bereich von 0,7 bis 20 μm in der Dispersion enthalten sind, wobei der Anteil an Partikeln e) in der Dispersion mindestens 5 Gew.-% des Feststoffanteils der Dispersion a) beträgt.

Die allgemeinen Formeln (I) und (II) sind so zu verstehen, dass x Substituenten R an den Alkylenrest Agebunden sein können.

Die Bestimmung des Durchmessers der Teilchen b) erfolgt beispielsweise über eine Ultrazentrifugenmessung. Eine Durchmesserverteilung der Teilchen b) bezieht sich auf eine Massenverteilung der Teilchen in der Dispersion in Abhängigkeit vom Teilchendurchmesser.

Die Bestimmung des Durchmessers der Feststoffpartikel e) in der Dispersion erfolgt beispielsweise über eine Laserbeugungsmessung. Eine Durchmesserverteilung dieser Feststoffpartikel bezieht sich auf eine Volumenverteilung der Feststoffpartikel e) in der Dispersion in Abhängigkeit vom Teilchendurchmesser.

Bevorzugt beträgt in der Dispersion a) der Anteil der Teilchen b) mit einem Durchmesser kleiner 700 nm, bezogen auf ihren Feststoffgehalt, mindestens 10 Gew.-%, besonders bevorzugt mindestens 15 Gew.-% des Feststoffgehalts der Dispersion.

Besonders bevorzugt beträgt der Anteil der Teilchen b) mit einem Durchmesser kleiner 500 nm, bezogen auf ihren Feststoffgehalt, mindestens 5 Gew.-%, besonders bevorzugt mindestens 10 Gew.-%, ganz besonders bevorzugt mindestens 15 Gew.-% des Feststoffgehalts der Dispersion a).

Ganz besonders bevorzugt beträgt der Anteil der Teilchen b) mit einem Durchmesser kleiner 400 nm, bezogen auf ihren Feststoffgehalt, mindestens 5 Gew.-%, besonders bevorzugt mindestens 10 Gew.-%, ganz besonders bevorzugt mindestens 15 Gew.-% des Feststoffgehalts der Dispersion a).

Die Teilchen b) des leitfähigen Polymers in der Dispersion a) haben in dem Verfahren bevorzugt einen mittleren Durchmesser von 5 bis 500 nm, besonders bevorzugt von 10 bis 300 nm.

Bevorzugt beträgt der Anteil der Feststoffpartikel e) mit einem Durchmesser im Bereich von 0,7 μm bis 20 μm, mindestens 10 Gew.-%, besonders bevorzugt mindestens 15 Gew.-% des Feststoffgehalts der Dispersion a).

Besonders bevorzugt beträgt der Anteil der Feststoffpartikel e) mit einem Durchmesser im Bereich von 1 μm

bis 10 μm mindestens 5 Gew.-%, besonders bevorzugt mindestens 10 Gew.-%, ganz besonders bevorzugt mindestens 15 Gew.-% des Feststoffgehalts der Dispersion a).

Ganz besonders bevorzugt beträgt der Anteil der Feststoffpartikel e) mit einem Durchmesser von 1 μm bis 5 μm mindestens 5 Gew.-%, besonders bevorzugt mindestens 10 Gew.-%, ganz besonders bevorzugt mindestens 15 Gew.-% des Feststoffgehalts der Dispersion a).

Die Feststoffpartikel e) haben in der Dispersion a) bevorzugt einen mittleren Durchmesser von 1 μm bis 10 μm, besonders bevorzugt einen mittleren Durchmesser von 1 μm bis 5 μm.

Die Feststoffpartikel e) haben in der Dispersion a) bevorzugt einen d10 Wert der Durchmesserverteilung von größer 0,9 μm und einen d90 Wert von kleiner 15 μm, besonders bevorzugt einen d10 Wert von größer 1 μm und einen d90 Wert von kleiner 10 μm, ganz besonders bevorzugt einen d10 Wert von größer 1,2 μm und einen d90 Wert von kleiner 8 μm.

Der d10 Wert der Durchmesserverteilung besagt dabei, dass 10 % des Gesamtvolumens aller Feststoffpartikel e) in der Dispersion a) solchen Teilchen zugeordnet werden kann, die einen Durchmesser kleiner oder gleich dem d10 Wert besitzen. Der d90 Wert der Durchmesserverteilung besagt, dass 90 % des Gesamtvolumens aller Feststoffpartikel e) in der Dispersion a) solchen Teilchen zugeordnet werden kann, die einen Durchmesser kleiner oder gleich dem d90 Wert besitzen.

Die Teilchen b) des leitfähigen Polymers, der Binder c) und die Feststoffpartikel e) bilden bevorzugt eine stabile Dispersion. Es können jedoch auch instabile Dispersionen verwendet werden, in dem diese vor Gebrauch beispielsweise gerührt, gerollt oder aufgeschüttelt werden, um eine gleichmäßige Verteilung der Komponenten zu gewährleisten.

Die Feststoffpartikel e) können anorganische, organische oder eine Mischung aus organischen und anorganischen Partikeln sein und weisen insbesondere eine von den Komponenten b) und c) verschiedene Zusammensetzung auf.

Als Feststoffpartikel e) können gebräuchliche Füllstoffe, beispielsweise Carbonate wie Calciumcarbonat, Silikate, Kieselerde, Calcium- oder Bariumsulfat, Aluminiumhydroxid, Glasfasern oder-kugeln, Holzmehl, Cellulose-Pulver oder Ruße verwendet werden.

Besonders geeignete anorganische Feststoffpartikel e) bestehen beispielsweise auf Kohlenstoff, Graphit, Ruß, Metallen, Metalloxiden, Keramik, Silicaten, Silizium, Siliziumoxiden, bevorzugt Siliziumdioxiden, wie gefällte Kieselsäuren, pyrogene Kieselsäuren, Kieselsole, Quarze oder Glas. Besonders bevorzugt sind gefällte Kieselsäuren, pyrogene Kieselsäuren und Kieselsole.

Organische Feststoffpartikel e) bestehen beispielsweise aus Polymeren, insbesondere aus elektrisch leitfähigen Polymeren, oder Cellulose.

Die Feststoffpartikel e) werden bevorzugt als Pulver in die Dispersion a) eingebracht, können aber auch in anderer Form, beispielsweise als Fasern oder Kugeln vorliegen.

Leitfähige Polymere als Basis für die Feststoffpartikel sind beispielsweise Polythiophene, Polypyrrole und Polyaniline, die substituiert oder nicht substituiert sein können.

Bevorzugte leitfähige Polymere für die Feststoffpartikel e) sind Polythiophene mit wiederkehrenden Einheiten der allgemeinen Formeln (I), (II) oder wiederkehrende Einheiten der allgemeinen Formeln (I) und (II), worin A, R und x die oben für die allgemeinen Formeln (I) und (II) genannten Bedeutungen haben.

Besonders bevorzugt als leitfähiges Polymer in den Feststoffpartikeln e) ist Poly (3,4-ethylendioxythiophen).

Das Elektrodenmaterial bildet im Elektrolytkondensator hergestellt nach dem erfindungsgemäßen Verfahren einen porösen Körper mit großer Oberfläche, und liegt z.B. in Form eines porösen Sinterkörpers oder einer aufgerauten Folie vor. Im Folgenden wird dieser poröse Körper auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Feststoffelektrolyten bedeckte Elektrodenkörper wird im Folgenden auch kurz als Kondensatorkörper bezeichnet.

Die elektrisch leitfähige Schicht, die mit dem erfindungsgemäßen Verfahren aus der Dispersion a) hergestellt wird und welche wenigstens ein gegebenenfalls substituiertes Polyanilin und/oder wenigstens ein Polythiophen mit wiederkehrenden Einheiten der allgemeinen Formel (I) oder der Formel (II) oder wiederkehrenden Einheiten der allgemeinen Formel (I) und (II) sowie wenigstens einen Binder c), und Feststoffpartikel e) enthält, wird hier als polymere Außenschicht bezeichnet.

Vorzugsweise enthält die Dispersion a) wenigstens einen polymeren, organischen Binder c). Als besonders bevorzugte polymere, organische Binder c) kommen beispielsweise Polyvinylalkohole, Polyvinylpyrrolidone, Polyvinylchloride, Polyvinylacetate, Polyvinylbutyrate, Polyacrylsäureester, Potyacrylsäureamide, Polymethacrylsäureester, Polymethacrylsäureamide, Polyacrylnitrile, Styrol/Acrylsäurecster-, Vinylacetat/Acrylsäureester- und Ethylen/Vinylacetat-Copolymerisate, Polybutadiene, Polyisoprene, Polystyrole, Polyether, Polyester, Polycarbonate, Polyurethane, Polyamide, Polyimide, Polysulfone, Melamin-Formaldehyharze, Epoxidharze, Siliconharze oder Cellulosen in Frage. Weiterhin

kommen bevorzugt als polymere organische Binder c) auch solche in Frage, die durch Zugabe von Vernetzern wie beispielsweise Melaminverbindungen, verkappten Isocyanaten oder funktionellen Silanen, wie z.B. 3-Glycidoxypropyltrialkoxysilan, Tetraethoxysilan und Tetraethoxysilanhydrolysat, oder vernetzbaren Polymeren wie z.B. Polyurethanen, Polyacrylaten oder Polyolefinen und anschließende Vernetzung erzeugt werden. Solche als polymere Binder c) geeigneten Vernetzungsprodukte können auch beispielsweise durch Reaktion der zugegebenen Vernetzer mit gegebenenfalls in der Dispersion a) enthaltenen polymeren Anionen gebildet werden. Bevorzugt sind solche Binder c), die eine ausreichende Temperaturstabilität aufweisen, um den Temperaturbelastungen zu widerstehen, denen die fertigen Kondensatoren später ausgesetzt werden, z.B. Löttemperaturen von 220 bis 260°C.

Der Feststoffanteil des bevorzugten polymeren Binders c) in der Dispersion a) beträgt 0,1 - 90 Gew.-%, bevorzugt 0,5 - 30 Gew.-% und ganz besonders bevorzugt 0.5 - 10 Gew.-%.

Bevorzugt wird soviel Binder c) der Dispersion a) zugegeben, dass man eine gute Adhäsion der polymeren Außenschicht an den Kondensatorkörper und eine hohe Stabilität innerhalb der polymeren Außenschicht erhält. Bevorzugt wird daher ein Verhältnis des Feststoffanteils (Gew.-%) des Binders c) zum Feststoffanteil der Feststoffpartikel e) von größer als 1:2, besonders bevorzugt von größer als 1:1. Hiermit wird die mechanische Stabilität der Schicht und die Anbindung der Schicht an den Kondensatorkörper weiter erhöht.

Die Dispersionen a) können ein oder mehrere Dispersionsmittel d) enthalten. Als Dispersionsmittel d) seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester, aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Dispersionsmittel d) verwendet werden.

Bevorzugte Dispersionsmittel d) sind Wasser oder andere protische Lösungsmittel wie Alkohole, z.B. Methanol, Ethanol, i-Propanol und Butanol, sowie Mischungen von Wasser mit diesen Aikoholen, besonders bevorzugtes Lösungsmittel ist Wasser.

Gegebenenfalls kann auch der Binder c) als Dispersionsmittel d) fungieren.

Der Begriff Polymere umfasst im Sinne der Erfindung alle Verbindungen mit mehr als einer gleichen oder unterschiedlichen Wiederholungseinheit.

Unter leitfähigen Polymeren wird hier insbesondere die Verbindungsklasse der $\pi$-konjugierten Polymere verstanden, die nach Oxidation oder Reduktion eine elektrische Leitfähigkeit besitzen. Bevorzugt werden solche $\pi$-konjugierten Polymere unter leitfähigen Polymeren verstanden, die nach Oxidation elektrische Leitfähigkeit in der Größenordnung von mindestens 1 $\mu S\ cm^{-1}$ besitzen.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (I) oder Formel (II) oder der allgemeinen Formeln (I) und (II), wobei n eine ganze Zahl von 2 bis 2000, bevorzugt 2 bis 100, ist. Die wiederkehrenden Einheiten der allgemeinen Formel (I) und/oder (II) können innerhalb eines Polythiophens jeweils gleich oder verschieden sein. Bevorzugt sind Polythiophene mit jeweils gleichen wiederkehrenden Einheiten der allgemeinen Formel(n) (I), (II) oder (I) und (II).

An den Endgruppen tragen die Polythiophene bevorzugt jeweils H.

Der Feststoffelektrolyt kann als leitfähige Polymere gegebenenfalls substituierte Polythiophene, gegebenenfalls substituierte Polypyrrole oder gegebenenfalls substituierte Polyaniline enthalten.

Bevorzugte leitfähige Polymere für den Feststoffelektrolyten sind Polythiophene mit wiederkehrenden Einheiten der allgemeinen Formel (I), (II) oder wiederkehrenden Einheiten der allgemeinen Formel (I) und (II), worin A, R und x die oben für die allgemeinen Formeln (I) und (II) genannten Bedeutung haben.

Besonders bevorzugt sind Polythiophene mit wiederkehrenden Einheiten der allgemeinen Formel (I), (II) oder wiederkehrenden Einheiten der allgemeinen Formel (I) und (II), worin A füreinen gegebenenfalls substituierten $C_2$-$C_3$-Alkylenrest und x für 0 oder 1 steht.

Ganz besonders bevorzugt als leitfähiges Polymer des Feststoffelektrolyten ist Poly(3,4-ethylendioxythiophen).

$C_1$-$C_5$-Alkylenreste A sind bevorzugt Methylen, Ethylen, n-Propylen, n-Butylen oder n-Pentylen. $C_1$-$C_{18}$-Alkyl R stehen bevorzugt für lineare oder verzweigte $C_1$-$C_{18}$-Alkylreste wie Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkylreste R stehen beispielsweise für Cyclopentyl, Cyclohexyl, Cycloheptyl, Cyclooctyl, Cyclononyl oder Cyclodecyl, $C_5$-$C_{14}$-Arylreste R stehen beispielsweise für Phenyl oder Naphthyl, und $C_7$-$C_{18}$-Aralkylreste R beispielsweise für Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend

zu betrachten.

Als gegebenenfalls weitere Substituenten der Reste A und/oder der Reste R kommen zahlreiche organische Gruppen in Frage, beispielsweise Alkyl-, Cycloalkyl-, Aryl-, Aralkyl-, Alkoxy, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Als Substituenten für Polyanilin kommen beispielsweise die oben aufgeführten Reste A und R und/oder die weiteren Substituenten der Reste A und R in Frage. Bevorzugt sind unsubstituierte Polyaniline.

Die als Feststoffelektrolyt in dem bevorzugten Verfahren eingesetzten Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein.

Polymere Anionen für den Einsatz im Feststoffelektrolyt können beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt werden für den Feststoffelektrolyten monomere Anionen eingesetzt, da diese besserin den oxidierten Elektrodenkörper eindringen.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der2-Ethylhexylcarbonsäure, von aliphatischen Perfluorcarbonsäuren, wie derTrifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate, Hexafluoroantimonate, Hexafluoroarsenate oder Hexachloroantimonate.

Bevorzugt sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Neben den leitfähigen Polymeren und gegebenenfalls noch Gegenionen kann der Feststoffelektrolyt Binder, Vernetzer, oberflächenaktive Substanzen, wie z.B. ionische oder nichtionische Tenside oder Haftvermittler und/oder weitere Additive enthalten.

Haftvermittler sind beispielsweise organofunktionelle Silane bzw. deren Hydrolysate, z.B. 3-Glycidoxypropyltrialkoxysilan, 3-Aminopropyltricthoxysilan, 3-Meroaptopropyltrimethoxysilan, 3-Metacryloxypropyltrimethoxysilan, Vinyltrimethoxysilan oder Octyltriethoxysilan.

Bevorzugt besteht der Feststoffelektrolyt aus dem leitfähigen Polymer und monomeren Anionen als Gegenionen.

Der Feststoffelektrolyt bildet vorzugsweise auf der Dielektrikumsoberfläche eine Schicht mit einer Dicke kleiner 200 nm, besonders bevorzugt kleiner 100 nm, ganz besonders bevorzugt kleiner 50 nm.

Die Bedeckung des Dielektrikums mit dem Feststoffelektrolyten kann folgendermaßen bestimmt werden: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Die polymere Außenschicht befindet sich bevorzugt, wie schematisch und beispielhaft in Fig. 1 und Fig. 2 dargestellt, auf der gesamten oder einem Teil der äußeren Oberfläche des Kondensatorkörpers. Unter äußerer Oberfläche werden die Außenflächen des Kondensatorkörpers verstanden.

Fig. 1 beschreibt eine schematische Darstellung des Aufbaus eines Feststoffelektrolytkondensators am Beispiel eines Tantalkondensators mit

1 Kondensatorkörper

5 polymere Außenschicht

6 Graphit/Silberschicht

7 Drahtkontakt zum Elektrodenkörper 2

8 äußere Kontakte

9 Verkapselung

10 Bildausschnitt

Fig. 2 beschreibt den vergrößerten Bildausschnitt 10 aus Fig. 1 der den schematischer Schichtaufbau des Tantalkondensators mit

10 Bildausschnitt

2 poröser Elektrodenkörper (Anode)

3 Dielektrikum

4 Feststoffelektrolyt (Kathode)

5 polymere Außenschicht

6 Graphit/Silberschicht

7 Feststoffpartikel

wiedergibt.

Unter geometrischer Oberfläche wird im Folgenden die Außenfläche des Kondensatorkörpers 1 verstanden, die sich aus den geometrischen Abmessungen ergibt. Für quaderförmige Sinterkörper beträgt die geometrische Oberfläche demnach:

$$\text{geometrische Oberfläche} = 2(L*B+L*H+B*H),$$

wobei L die Länge, B die Breite und H die Höhe des Körpers ist und * als Multiplikationszeichen steht. Dabei wird nur der Teil des Kondensatorkörpers 1 betrachtet, auf dem sich die polymere Außenschicht befindet.

Werden mehrere Kondensatorkörper 1 in einem Kondensator verwendet, so addieren sich die einzelnen geometrischen Oberflächen zur einer gesamten geometrischen Oberfläche.

Für Feststoffelektrolytkondensatoren, die beispielsweise eine gewickelte Folie als porösen Elektrodenkörper enthalten, werden als Maße die Abmessungen der entwickelten Folie (Länge, Breite) verwendet.

Anstelle von Feststoffelektrolyten enthaltend ein leitfähiges Polymer können die Feststoffelektrolytkondensatoren auch Feststoffelektrolyte enthaltend ein nicht polymeres leitfähiges Material, wie beispielsweise Ladungstransferkomplexe, wie z.B. TCNQ (7,7,8,8-Tetracyano-1,4-chinodimethan), Mangandioxid oder Salze, wie z.B. solche die ionische Flüssigkeiten bilden können, enthalten. Auch bei solchen Feststoffelektrolytkondensatoren führt die polymere

Außenschicht zu niedrigeren Restströmen.

Für die Polythiophene der Teilchen b) des elektrisch leitenden Polymeren mit wiederkehrenden Einheiten der allgemeinen Formel (I), (II) oderwiederkehrenden Einheiten der allgemeinen Formel (I) und (II), die sich in der Dispersion a) befinden, gelten dieselben bevorzugten Strukturmerkmale wie für die Polythiophene im Feststoffelektrolyten.

Als Gegenion für die Polyaniline und/oder die Polythiophene der genannten Teilchen b) mit wiederkehrenden Einheiten der allgemeinen Formel (I), (II) oder wiederkehrenden Einheiten der allgemeinen Formel (I) und (II) in der Dispersion a) können polymere oder monomere Anionen fungieren. Bevorzugt dienen jedoch polymere Anionen in der Dispersion a) als Gegenionen.

Polymere Anionen können hier beispielsweise Anionen polymerer Carbonsäure, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist in den genannten Teilchen b) als polymeres Anion ein Anion einer polymeren Carbon- oder Sulfonsäure.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und elektrisch leitende Polymere können in der Dispersion a) insbesondere in einem Gewichtsverhältnis von 0,5:1 bis 50:1, bevorzugt von 1:1 bis 30:1, besonders bevorzugt 2:1 bis 20:1 enthalten sein. Das Gewicht der elektrisch leitende Polymere entspricht hierbei der Einwaage der eingesetzten Monomere unter Annahme, dass bei der Polymerisation vollständiger Umsatz erfolgt.

Die Dispersion a) kann auch monomere Anionen enthalten. Für die monomeren Anionen gelten dieselben bevorzugten Anionen wie oben für den Feststoffelektrolyten aufgeführt.

Die Dispersion a) kann außerdem weitere Komponenten enthalten wie oberflächenaktive Substanzen, z.B. ionische und nichtionische Tenside oder Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyl-trimethoxysilan, 3-Metacryloxypropyltrimethoxysilan, Vinyltrimethoxysilan oder Octyltriethoxysilan.

Die Dicke der polymeren Außenschicht beträgt bevorzugt 1-1000 μm, besonders bevorzugt 1-100 μm, ganz besonders bevorzugt 2-50 μm, insbesondere besonders bevorzugt 4-20 μm. Die Schichtdicke kann auf der äußeren Oberfläche variieren. Insbesondere kann die Schichtdicke an den Kanten des Kondensatorkörpers dicker oder dünner als auf den Seitenflächen des Kondensatorkörpers sein. Bevorzugt wird jedoch eine nahezu homogene Schichtdicke.

Die polymere Außenschicht kann bezüglich ihrer Zusammensetzung hinsichtlich der Binder c) und leitfähigen Polymere eine homogene oder inhomogene Verteilung aufweisen. Bevorzugt werden homogene Verteilungen.

Die polymere Außenschicht kann Bestandteil eines Vielschichtsystems sein, das die Außenschicht des Kondensatorkörpers bildet. So können sich zwischen dem Feststoffelektrolyten und der polymeren Außenschicht eine oder mehrere weitere funktionelle Schichten (z. B. Haftvermittlerschichten) befinden. Die elektrische Funktion der polymeren Außenschicht sollte hierdurch jedoch nicht beeinträchtigt werden. Es können sich auch weitere funktionelle Schichten auf der polymeren Außenschicht befinden. Ferner können sich mehrere polymere Außenschichten auf dem Kondensatorkörper befinden.

Bevorzugt befindet sich die polymere Außenschicht direkt auf dem Feststoffelektrolyten. Die polymere Außenschicht dringt bevorzugt in den Randbereich des Kondensatorkörpers ein, um einen guten elektrischen Kontakt zu dem Feststoffelektrolyten zu erzielen und die Haftung zum Kondensatorkörper zu erhöhen, jedoch nicht in die gesamte Tiefe aller Poren (vgl. beispielhaft Fig.2).

In einer besonders bevorzugten Ausführungsform enthält der nach dem neuen Verfahren hergestellte Elektrolytkondensator einen Feststoffelektrolyten enthaltend Poly(3,4-ethylendioxythiophen) (PEDT) und eine polymere Außenschicht enthaltend Polystyrolsulfonsäure (PSS) und Poly(3,4-ethylendioxythiophen), letzteres wird in der Literatur häufig auch als PEDT/PSS oder PEDOT/PSS bezeichnet.

In einer ganz besonders bevorzugten Ausführungsform enthält der nach dem neuen Verfahren hergestellte Elektrolytkondensator eine Feststoffelektrolyten aus Poly(3,4-ethylendioxythiophen) und monomeren Gegenionen und eine polymere Außenschicht aus PEDT/PSS, einem Binder c) und Feststoffpartikeln e).

Weiterhin bevorzugt ist ein Verfahren zur Herstellung von Elektrolytkondensatoren, dadurch gekennzeichnet, dass es sich bei dem Elektrodenmaterial um ein Ventilmetall oder um eine Verbindung mit einem Ventilmetall vergleichbaren elektrischen Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die

Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind Al, Ta, und Nb. Verbindungen einem Ventilmetall vergleichbaren elektrischen Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen einem Ventilmetall vergleichbaren elektrischen Eigenschaften sind.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Besonders bevorzugt Gegenstand der vorliegenden Erfindung ist demgemäss ein Verfahren zur Herstellung von Elektrolytkondensatoren, dadurch gekennzeichnet, dass es sich bei dem Ventilmetall oder der Verbindung einem Ventilmetall vergleichbaren elektrischen Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des oxidierten Elektrodenkörpers hängt neben der Art des Dielektrikums von der Oberfläche und der Dicke des Dielektrikums ab. Die spezifische Ladung ist ein Maß dafür, wie viel Ladung pro Gewichtseinheit der oxidierte Elektrodenkörper aufnehmen kann. Die spezifische Ladung berechnet sich wie folgt:

**Spezifische Ladung = (Kapazität * Spannung)/ Gewicht des oxidierten Elektrodenkörpers.**

Die Kapazität ergibt sich dabei aus der Kapazität des fertigen Kondensators gemessen bei 120 Hz und die Spannung ist die Arbeitsspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die nach dem neuen Verfahren hergestellten Elektrolytkondensatoren eine spezifische Ladung größer als 10000 μC/g, besonders bevorzugt größer 20000 μC/g, ganz besonders bevorzugt größer 30000 μC/g, überaus bevorzugt größer 40000 μC/g auf.

Der nach den erfindungsgemäßen Verfahren hergestellte Feststoffelektrolytkondensator zeichnet sich durch einen niedrigen Reststrom und niedrigen äquivalenten Serienwiderstand aus. Da die polymere Außenschicht eine dichte Schicht um den Kondensatorkörper bildet und dessen Kanten sehr gut belegt, ist der Kondensatoricörper robust gegenüber mechanischen Belastungen. Zudem zeigt die polymere Außenschicht eine gute Adhäsion zum Kondensatorkörper und eine hohe elektrische Leitfähigkeit, so dass sich niedrige äquivalente Serienwiderstände erreichen lassen. Die polymere Außenschicht weist relativ zur Schichtdicke nur eine geringe Rauhigkeit auf. Dadurch sind in der Außenschicht keine dünnen Bereiche vorhanden, an denen hohe Restströme auftreten können.

Bevorzugter Gegenstand der Erfindung sind nach dem neuen Verfahren hergestellte Elektrolytkondensatoren, die einen ESR gemessen bei 100 kHz von kleiner 50 mΩ aufweisen. Besonders bevorzugt ist der ESR der nach dem neuen Verfahren hergestellte Elektrolytkondensatoren, der bei einer Frequenz von 100 kHz gemessen wird, kleiner 31 mΩ, ganz besonders bevorzugt kleiner 21 mΩ, überaus bevorzugt kleiner 16 mΩ. In besonders bevorzugten Ausführungsformen der Elektrolytkondensatoren ist der ESR kleiner 11 mΩ.

Der äquivalente Serienwiderstand eines Feststoffelektrolytkondensators korreliert inversmitdergeometrischen Oberfläche des Kondensators. Das Produkt aus dem äquivalenten Serienwiderstand und der geometrischen Oberfläche gibt demnach eine von der Baugröße unabhängige Größe an.

Ebenfalls bevorzugt Gegenstand dervorliegenden Erfindung sind daher nach dem neuen Verfahren hergestellte Elektrolytkondensatoren, bei denen das Produkt aus dem Äquivalenten Serienwiderstand gemessen bei 100 kHz und der geometrischen Oberfläche des Kondensatorkörpers kleiner 4000 m$\Omega$mm$^2$ ist. Besonders bevorzugt ist das Produkt aus dem äquivalenten Serienwiderstand und der geometrischen Oberfläche kleiner 3000 m$\Omega$mm$^2$, ganz besonders bevorzugt kleiner 2000 m$\Omega$mm$^2$, überaus bevorzugt kleiner 1000 m$\Omega$mm$^2$. In besonders bevorzugten Ausführungsformen der Elektrolytkondensatoren ist das Produkt aus dem äquivalenten Serienwiderstand und der geometrischen Oberfläche kleiner 600 m$\Omega$mm$^2$.

Prinzipiell kann ein solcher erfindungsgemäßer Elektrolytkondensator folgendermaßen hergestellt werden: Zunächst wird z.B. ein Ventilmetall-Pulver mit einer hohen Oberfläche gepresst und zu einem porösen Elektrodenkörper gesintert. Hierbei wird üblicherweise ein elektrischer Kontaktdraht aus dem gleichen Metall des Pulvers, z. B. Tantal mit

in den Elektrodenkörper eingepresst. Es können alternativ auch Metallfolien geätzt werden, um eine poröse Folie zu erhalten.

Der Elektrodenkörper wird dann beispielsweise durch elektrochemische Oxidation, mit einem Dielektrikum, d. h. einer Oxidschicht, überzogen. Auf dem Dielektrikum wird dann z. B. mittels oxidativer Polymerisation chemisch oder elektrochemisch ein leitfähige Polymer abgeschieden, welches den Feststoffelektrolyten bildet. Dazu werden Vorstufen zur Herstellung leitfähiger Polymere, ein oder mehrere Oxidationsmittel und gegebenenfalls Gegenionen, zusammen oder nacheinander auf das Dielektrikum des porösen Elektrodenkörpers aufgebracht und chemisch oxidativ polymerisiert, oder es werden Vorstufen zur Herstellung leitfähiger Polymere und Gegenionen durch elektrochemische Polymerisation dem Dielektrikum des porösen Elektrodenkörpers polymerisiert. Auf den Kondensatorkörper wird daraufhin erfindungsgemäß eine Schicht enthaltend wenigstens ein gegebenenfalls substituiertes Polyanilin und/oder ein Polythiophen mitwiederkehrenden Einheiten derallgemeinen Formel (I), (II) oderwiederkehrenden Einheiten derallgemeinen Formel (I) und (II), sowie wenigstens einem Binder c) und Feststoffpartikel e) aus einer Dispersion a) aufgebracht. Gegebenenfalls werden weitere Schichten auf die polymere Außenschicht aufgebracht. Ein Überzug mit gut leitfähigen Schichten, wie Graphit und Silber, oder ein metallischer Kathodenkörper dient als Elektrode zur Ableitung des Stroms. Schließlich wird der Kondensator kontaktiert und eingekapselt.

Als Vorstufen fürdie Herstellung leitfähiger Polymere des Feststoffelektrolyten, im Folgenden auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene.

Als substituierte 3,4-Alkylendioxythiophene seien beispielhaft die Verbindungen der allgemeinen Formel (III), (IV) oder einer Mischung aus Thiophenen der allgemeinen Formeln (III) und (IV),

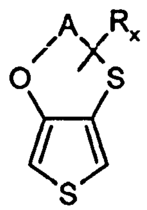
(III)
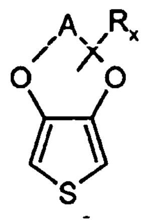
(IV)

aufgeführt,
worin

- A für einen gegebenenfalls substituierten $C_1$-$C_5$-Alkylenrest, bevorzugt für einen gegebenenfalls substituierten $C_2$-$C_3$-Alkylenrest, steht,
- R für einen linearen oder verzweigten, gegebenenfalls substituierten $C_1$-$C_{18}$-Alkylrest, bevorzugt linearen oder verzweigten, gegebenenfalls substituierten $C_1$-$C_{14}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$-Hydroxyalkylrest, oder einen Hydroxylrest steht,
- x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können,
Ganz besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (V) genannt,

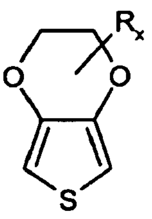
(V)

worin

R und x die für die allgemeine Formeln (III) und (IV) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (VI) genannt,

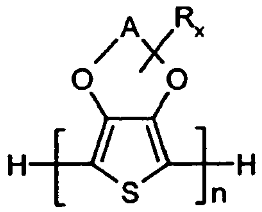

(VI)

worin

n für eine ganze Zahl von 2 bis 20, bevorzugt 2 bis 6, besonders bevorzugt für 2 oder 3 steht, und

A, R und x die für die allgemeine Formeln (III) und (IV) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfähigen Polymeren entstehen wie bei den vorangehend aufgeführten Vorstufen.

$C_1$-$C_5$-Alkylenreste A sind im Rahmen der Erfindung Methylen, Ethylen, n-Propylen, n-Butylen oder n-Pentylen. $C_1$-$C_{18}$-Alkylreste R stehen im Rahmen der Erfindung für lineare oder verzweigte $C_1$-$C_{18}$-Alkylreste wie beispielsweise Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkylreste R stehen beispielsweise für Cyclopentyl, Cyclohexyl, Cycloheptyl, Cyclooctyl, Cyclononyl oder Cyclodecyl, $C_5$-$C_{14}$-Arylreste R stehen beispielsweise für Phenyl oder Naphthyl, und $C_7$-$C_{18}$-Aralkylreste R beispielsweise für Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der Reste A und/oder der Reste R kommen zahlreiche organische Gruppen in Frage, beispielsweise Alkyl-, Cycloalkyl-, Aryl-, Aralkyl-, Alkoxy-, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Als Substituenten für die oben genannten Vorstufen, insbesondere für die Thiophene, bevorzugt für die 3,4-Alkylendioxythiophene kommen die für die allgemeine Formeln (III) und (IV) für R genannten Reste in Frage.

Als Substituenten für Pyrrole und Aniline kommen beispielsweise die oben aufgeführten Reste A und R und/oder die weiteren Substituenten der Reste A und R in Frage.

Verfahren zur Herstellung der monomeren Vorstufen für die Herstellung leitfähiger Polymere sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die für die Herstellung der zu verwendenden Polythiophene erforderlichen 3,4-Alkylenoxythiathiophene der Formel (III) sind dem Fachmann bekannt oder nach bekannten Verfahren herstellbar (beispielsweise gemäß P. Blanchard, A. Cappon, E. Levillain, Y. Nicolas, P. Frère und J. Roncali, Org. Lett. 4 (4), 2002, S. 607 - 609).

Die leitfähigen Polymere werden auf den mit einem Dielektrikum bedeckten Elektrodenkörper durch oxidative Polymerisation von Vorstufen zur Herstellung leitfähiger Polymer bevorzugt dadurch erzeugt, indem man auf dem Dielektrikum des Elektrodenkörpers die Vorstufen, Oxidationsmittel und gegebenenfalls Gegenionen, vorzugsweise in Form von Lösungen, entweder getrennt nacheinander oder zusammen aufbringt und die oxidative Polymerisation, je nach Aktivität des verwendeten Oxidationsmittels, gegebenenfalls durch ein Erwärmen der Beschichtung zu Ende führt.

Die Aufbringung kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxy-silan, 3-Mercaptopropyltrimethoxysilan, 3-Metacryloxypropyltrimethoxysilan, Vinyltri-methoxysilan oder Octyltriethoxysilan., und/oder einer oder mehrerer anderer funktionellen Schichten auf das Dielektrikum des Elektrodenkörpers erfolgen.

Die oxidative chemische Polymerisation der Thiophene der Formel(n) (III) oder (IV) wird je nach verwendetem Oxidationsmittel und gewünschter Reaktionszeit im Allgemeinen bei Temperaturen von -10°C bis 250°C, bevorzugt bei Temperaturen von 0°C bis 200°C, vorgenommen.

Als Lösungsmittel für die Vorstufen zur Herstellung leitfähiger Polymere und/oder Oxidationsmittel und/oder Gegenionen seien vor allem folgende unter den Reaktionsbedingungen inerten organischen Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester, aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan, aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Lösungsmittel verwendet werden.

Als Oxidationsmittel können alle dem Fachmann bekannten für die oxidative Polymerisation von Thiophenen, Anilinen oder Pyrrolen geeignete Metallsalze verwendet werden.

Geeignete Metallsalze sind Metallsalze von Haupt- oder Nebengruppenmetallen, letztere im Folgenden auch als Übergangsmetallsalze bezeichnet, des Periodensystems der Elemente. Geeignete Übergangsmetallsalze sind insbesondere Salze einer anorganischen oder organischen Säure oder organische Reste aufweisenden anorganischen Säure von Übergangsmetallen, wie z.B. von Eisen(III), Kupfer(II), Chrom(VI), Cer(IV), Mangan(IV), Mangan(VII) und Ruthenium(III).

Bevorzugte Übergangsmetallsalze sind solche des Eisen(III). Übliche Eisen(III)-Salze sind vorteilhafterweise preiswert, leicht erhältlich und können leicht gehandhabt werden, wie z.B. die Eisen(III)-Salze anorganischer Säuren, wie beispielsweise Eisen(III)halogenide (z.B. $FeCl_3$) oder Eisen(III)-Salze anderer anorganischer Säuren, wie $Fe(ClO_4)_3$ oder $Fe_2(SO_4)_3$, und die Eisen(III)-Salze organischer Säuren und organische Reste aufweisender anorganischer Säuren.

Als Eisen(III)-Salze organische Reste aufweisender anorganischer Säuren seien beispielsweise die Eisen (III)-Salze der Schwefelsäuremonoester von $C_1$-$C_{20}$-Alkanolen, z.B. das Eisen(III)-Salz des Laurylsulfates genannt.

Besonders bevorzugte Übergangsmetallsalze sind solche einer organischen Säure, insbesondere Eisen (III)-Salze organischer Säuren.

Als Eisen(III)-Salze organischer Säuren seien beispielsweise genannt: die Eisen(III)-Salze von $C_1$-$C_{20}$-Alkansulfonsäuren, wie der Methan-, Ethan-, Propan-, Butan- oder höherer Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie derTrifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure.

Es können auch beliebige Gemische dieser vorgenannten Eisen(III)-Salze organischer Säuren eingesetzt werden.

Die Verwendung der Eisen(IM-salze organischer Säuren und der organischen Reste aufweisenden anorganischen Säuren hat den großen Vorteil, dass sie nicht korrosiv wirken.

Ganz besonders bevorzugt als Metallsalze sind Eisen(III)-p-toluolsulfonat, Eisen(III)-o-toluolsulfonat oder einer Mischung aus Eisen(III)-p-toluolsutfonat und Eisen(III)-o-toluolsulfonat.

Weiterhin geeignete Oxidationsmittel sind Peroxoverbindungen wie Peroxodisulfate (Persulfate), insbesondere Ammonium- und Alkaliperoxodisulfate, wie Natrium- und Kaliumperoxodisulfat, oder Alkaliperborate - gegebenenfalls in Anwesenheit katalytischer Mengen an Metallionen, wie Eisen-, Cobalt-, Nickel-, Molybdän- oder Vanadiumionen - sowie Übergangsmetalloxide, wie z.B. Braunstein (Mangan(IV)oxid) oder Cer(IV)oxid.

Für die oxidative Polymerisation der Thiophene der Formel (III) oder (IV) werden theoretisch je Mol Thiophen 2,25 Äquivalente Oxidationsmittel benötigt (siehe z.B. J. Polym. Sc. Part A Polymer Chemistry Vol. 26, S. 1287 (1988)). Es können aber auch niedrigere oder höhere Äquivalente an Oxidationsmittel eingesetzt werden. Im Rahmen der Erfindung wird je Mol Thiophen bevorzugt ein Äquivalent oder mehr, besonders bevorzugt 2 Äquivalente oder mehr Oxidationsmittel eingesetzt.

Bei getrennter Aufbringung von Vorstufen, Oxidationsmitteln und gegebenenfalls Gegenionen wird das Dielektrikum des Elektrodenkörpers vorzugsweise zunächst mit der Lösung des Oxidationsmittels und gegebenenfalls der Gegenionen und anschließend mit der Lösung der Vorstufen beschichtet. Bei der bevorzugten gemeinsamen Aufbringung von Vorstufen, Oxidationsmittel und gegebenenfalls Gegenionen wird das Dielektrikum des Elektrodenkörpers nur mit einer, nämlich einer Vorstufen, Oxidationsmittel und gegebenenfalls Gegenionen enthaltenden Lösung beschichtet.

Den Lösungen können außerdem weitere Komponenten wie ein oder mehrere in organischen Lösungsmitteln

lösliche organische Bindemittel wie Polyvinylacetat, Polycarbonat, Polyvinylbutyral, Polyacrylsäureester, Polymethacrylsäureester, Polystyrol, Polyacrylnitril, Polyvinylchlorid, Polybutadien, Polyisopren, Polyether, Polyester, Silicone, Styrol Acrylsäureester-, Vinylacetat/Acrylsäureester- und Ethylen/Vinylacetat-Copolymerisate oderwasserlösliche Bindemittel wie Polyvinylalkohole, Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen, und/oder Additive wie z.B. oberflächenaktive Stoffe, z.B. ionische oder nichtionische Tenside oder Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyl-trimethoxysilan, Vinyltrimethoxysilan, Octyltriethoxysilan. zugesetzt werden.

Die auf das Dielektrikum des Elektrodenkörpers aufzubringenden Lösungen enthalten vorzugsweise 1 bis 30 Gew.-% des Thiophens der allgemeinen Formel (III) oder der Mischung aus Thiophenen der allgemeinen Formeln (III) und (IV) und 0 bis 50 Gew.-% Bindemittel, Vernetzer und/oder Additive, beide Gewichtsprozente bezogen auf das Gesamtgewicht der Mischung.

Die Lösungen werden nach bekannten Verfahren, z.B. durch Tränkung, Gießen, Auftropfen, Spritzen, Aufsprühen, Aufrakeln, Bestreichen, Spincoating oder Bedrucken, beispielsweise Ink-jet-, Sieb-, Kontakt-oderTampondrucken, auf das Dielektrikum des Elektrodenkörpers aufgebracht.

Das Entfernen der Lösungsmittel nach dem Aufbringen der Lösungen kann durch einfaches Verdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Polymers 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Nach dem Entfernen der Lösungsmittel (Trocknen) und gegebenenfalls nach derthermischen Nachbehandlung kann es vorteilhaft sein, das überschüssige Oxidationsmittel und Restsalze aus der Beschichtung mit einem geeigneten Lösungsmittel, bevorzugt Wasser oder Alkoholen, auszuwaschen. Unter Restsalzen sind hier die Salze der reduzierten Form des Oxidationsmittels und gegebenenfalls weitere vorhandene Salze zu verstehen.

Fürmetalloxidische Dielektrika, wie beispielsweise die Oxide derVentilmetalle, kann es nach der Polymerisation und bevorzugt während oder nach der Waschung vorteilhaft sein, den Oxidfilm elektrochemisch nachzubilden, um eventuelle Fehlstellen im Oxidfilm auszubessern und dadurch den Reststrom des fertigen Kondensators zu senken. Bei dieser sogenannten Reformierung taucht man den Kondensatorkörper in einen Elektrolyten ein und legt eine positive Spannung an den Elektrodenkörper. Der fließende Strom bildet das Oxid an defekten Stellen im Oxidfilm nach bzw. zerstört leitfähiges Polymer an Fehlstellen, über die ein hoher Strom fließt.

Je nach Art des oxidierten Elektrodenkörpers kann es vorteilhaft sein, den oxidierten Elektrodenkörper bevorzugt nach einer Waschung weitere Male mit den Mischungen zu imprägnieren, um dickere Polymerschichten zu erzielen.

Die Polythiophene des Feststoffelektrolyten können aus den Vorstufen auch durch elektrochemische oxidative Polymerisation hergestellt werden.

Bei der elektrochemischen Polymerisation kann der mit einem Dielektrikum überzogene Elektrodenkörper zunächst mit einer dünnen Schicht eines leitfähigen Polymers beschichtet werden. Nach Anlegen einer Spannung an diese Schicht wächst die Schicht enthaltend das leitfähige Polymer darauf auf. Es können auch andere leitfähigen Schichten als Abscheidungsschicht verwendet werden. So beschreiben Y. Kudoh et al. in Journal of Power Sources 60 (1996) 157-163 die Verwendung einer Abscheidungsschicht aus Manganoxid.

Die elektrochemische oxidative Polymerisation der Vorstufen kann bei Temperaturen von -78°C bis zum Siedepunkt des eingesetzten Lösungsmittels vorgenommen werden. Bevorzugt wird bei Temperaturen von -78°C bis 250°C, besonders bevorzugt von -20°C bis 60°C elektrochemisch polymerisiert.

Die Reaktionszeit beträgt in Abhängigkeit von der verwendeten Vorstufe, dem verwendeten Elektrolyten, der gewählten Temperatur und der angewendeten Stromdichte 1 Minute bis 24 Stunden.

Sofern die Vorstufen flüssig sind, kann die Elektropolymerisation in An- oder Abwesenheit von unter den Bedingungen der Elektropolymerisation inerten Lösungsmitteln vorgenommen werden; die Elektropolymerisation von festen Vorstufen wird in Gegenwart von unter den Bedingungen der elektrochemischen Polymerisation inerten Lösungsmitteln durchgeführt. In bestimmten Fällen kann es vorteilhaft sein, Lösungsmittelgemische einzusetzen und/oder den Lösungsmitteln Lösungsvermittler (Detergentien) zuzusetzen.

Als unter den Bedingungen der Elektropolymerisation inerte Lösungsmittel seien beispielsweise genannt: Wasser; Alkohole wie Methanol und Ethanol; Ketone wie Acetophenon; halogenierte Kohlenwasserstoffe wie Methylenchlorid, Chloroform, Tetrachlorkohlenstoff und Fluorkohlenwasserstoffe; Ester wie Ethylacetat und Butylacetat; Kohlensäureesterwie Propylencarbonat; aromatische Kohlenwasserstoffe wie Benzol, Toluol, Xylol; aliphatische Kohlenwasserstoffe wie Pentan, Hexan, Heptan und Cyclohexan; Nitrile wie Acetonitril und Benzonitril; Sulfoxide wie Dimethylsulfoxid; Sulfone wie Dimethylsulfon, Phenylmethylsulfon und Sulfolan; flüssige aliphatische Amide wie Methylacetamid, Dimethylacetamid, Dimethylformamid, Pyrrolidon, N-Methylpyrrolidon, N-Methylcaprolactam; aliphatische und gemischt aliphatischaromatische Ether wie Diethylether und Anisol; flüssige Harnstoffe wie Tetramethylharnstoff oder N,N-Dimethylimidazolidinon.

Für die Elektropolymerisation werden die Vorstufen bzw. deren Lösungen mit Elektrolytzusätzen versetzt. Als Elektrolytzusätze werden vorzugsweise freie Säuren oder übliche Leitsalze verwendet, die eine gewisse Löslichkeit in den verwendeten Lösungsmitteln aufweisen. Als Elektrolytzusätze haben sich z.B. bewährt: freie Säuren wie p-Toluolsulfonsäure, Methansulfonsäure, ferner Salze mit Alkansulfonat-, aromatischen Sulfonat-, Tetrafluoroborat-, Hexafluorophosphat-, Perchlorat-, Hexafluoroantimonat-, Hexafluoroarsenat-undHexachloroantimonat-Anionen und Alkali-, Erdalkali- oder gegebenenfalls alkylierten Ammonium-, Phosphonium-, Sulfonium- und Oxonium-Kationen.

Die Konzentrationen der Vorstufen können zwischen 0,01 und 100 Gew.-% (100 Gew.-% nur bei flüssiger Vorstufe) liegen; bevorzugt betragen die Konzentrationen 0,1 bis 20 Gew.-%.

Die Elektropolymerisation kann diskontinuierlich oder kontinuierlich durchgeführt werden.

Die Stromdichten für die Elektropolymerisation können in weiten Grenzen schwanken; üblicherweise wird mit Stromdichten von 0,0001 bis 100 mA/cm$^2$, vorzugsweise 0,01 bis 40 mA/cm$^2$ gearbeitet. Bei diesen Stromdichten stellen sich Spannungen von etwa 0,1 bis 50 V ein.

Für metalloxidische Dielektrika kann es nach der elektrochemischen Polymerisation vorteilhaft sein, den Oxidfilm elektrochemisch nachzubilden, um eventuelle Fehlstellen im Oxidfilm auszubessern und dadurch den Reststrom des fertigen Kondensators zu senken (Reformierung).

Als Gegenionen eignen sich die oben bereits aufgeführten monomeren oder polymeren Anionen, bevorzugt diejenigen der monomeren oder polymeren Alkan- oder Cycloalkansulfonsäuren oder aromatischen Sulfonsäuren. Besonders bevorzugt zur Anwendung in den erfindungsgemäßen Elektrolytkondensatoren sind die Anionen dermonomeren Alkan- oder Cycloalkansulfonsäuren oder aromatischen Sulfonsäuren, da diese enthaltende Lösungen besser geeignet sind, in das poröse mit einem Dielektrikum beschichtete Elektrodenmaterial einzudringen, und somit eine größere Kontaktfläche zwischen diesem und dem Feststoffelektrolyten gebildet werden kann. Die Gegenionen werden den Lösungen beispielsweise in Form ihrer Alkalisalze oder als freie Säuren zugegeben. Bei der elektrochemischen Polymerisation werden diese Gegenionen der Lösung oder den Thiophenen gegebenenfalls als Elektrolytzusätze oder Leitsalze zugegeben.

Außerdem können als Gegenionen die gegebenenfalls vorhandenen Anionen des verwendeten Oxidationsmittels dienen, so dass im Falle der chemischen oxidativen Polymerisation eine Zugabe zusätzlicher Gegenionen nicht zwingend erforderlich ist.

Nach Herstellung des Feststoffelektrolyten wird die polymere Außenschicht wie oben beschrieben aufgebracht.

Der Zusatz von Bindern hat den großen Vorteil, dass die Adhäsion der äußeren Polymerschicht an den Kondensatorkörper erhöht wird. Darüber hinaus bindet der Binder die Feststoffpartikel in dem polymeren Außenfilm. Die Feststoffpartikel in der Größe von 0,7 μm bis 20 μm führen dazu, dass sich mit der Dispersion auch Kanten und Ecken vollkommen mit einer hinreichenden Außenschicht belegen lassen.

Die Dispersionen a) können außerdem Vernetzer, oberflächenaktive Stoffe, wie z.B. ionische odernichtionische Tenside oder Haftvermittler, und/oder Additive enthalten. Als Vernetzer, oberflächenaktive Stoffe und/oder Additive können die oben zu dem Feststoffelektrolyten aufgeführten verwendet werden.

Bevorzugt enthalten die Dispersionen a) weitere Additive, die die Leitfähigkeit steigern, wie z.B. ethergruppenhaltige Verbindungen, wie z.B. Tetrahydofuran, lactongruppenhaltige Verbindungen wie γ-Butyrolacton, γ-Valerolacton, amid- oder lactamgruppenhaltige Verbindungen wie Caprolactam, N-Methylcaproiactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfone und Sulfoxide, wie z.B. Sulfolan (Tetramethylensulfon), Dimethylsulfoxid (DMSO), Zucker oder Zuckerderivate, wie z.B. Saccharose, Glucose, Fructose, Lactose, Zuckeralkohole wie z.B. Sorbit, Mannit, Furanderivate, wie z.B. 2- Furancarbonsäure, 3-Furancarbonsäure, und/oder Di- oder Polyalkohole, wie z.B. Ethylenglycol, Glycerin, Di- bzw. Triethylenglycol. Besonders bevorzugt werden als leitfähigkeitserhöhende Additive Tetrahydrofuran, N-Methylformamid, N-Methylpyrrolidon, Ethylenglycol, Dimethylsulfoxid, Ethylenglykol oder Sorbit eingesetzt.

Die Dispersionen a) können einen pH Wert von 1-14 haben, bevorzugt ist ein pH Wert von 1-8. Für korrosionsempfindliche Dielektrika, wie beispielsweise Aluminiumoxide, werden Dispersionen bevorzugt mit einem pH Wert von 4-8, um das Dielektrikum nicht zu schädigen.

Die Dispersionen sind bevorzugt thixotropisch, um eine gute Kanten- und Eckenbelegung der Kondensatorkörper zu erleichtern.

Die Herstellung der Dispersionen erfolgt aus gegebenenfalls substituierten Anilinen, Thiophenen der allgemeinen Formel (III), (IV) oder Mischungen aus Thiophenen der allgemeinen Formeln (III) und (IV) beispielsweise analog zu den in EP-A 440 957 genannten Bedingungen. Als Oxidationsmittel und Lösungsmittel kommen die vorangehend bereits aufgeführten in Frage. Die Durchmesserverteilung der Teilchen b) lässt sich beispielsweise über eine Hochdruckhomogenisierung einstellen.

Auch eine Herstellung des Polyanilin/Polyanion oder Polythiophen/Polyanion-Komplexes und anschließende Dispergierung oder Redispergierung in einem oder mehreren Lösungsmittel(n) ist möglich.

Die Dispersionen a) werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken auf den Kondensatorkörper aufgebracht.

Die Viskosität der Dispersion a) kann je nach Aufbringungsart von 0,1 bis 100 000 mPa·s (gemessen bei einer Scherrate von 100 $s^{-1}$) betragen. Bevorzugt beträgt die Viskosität 1 bis 10 000 mPa·s, besonders bevorzugt zwischen 10 bis 1500 mPa·s, ganz besonders bevorzugt 100 bis 1000 mPa·s.

Bei Aufbringung der Dispersion a) auf Kondensatorkörper mittels Tränkung kann es vorteilhaft sein, dass man vor der Tränkung einen dünnen Film höherer Viskosität auf der Oberfläche der Dispersion a) ausbilden lässt. Wird der Kondensatorkörper dann in ein oder mehreren Tränkungs- und Trocknungszyklen sukzessive tiefer in eine solche Dispersion a) getaucht, so wird die Belegung der Kanten und Ecken des Kondensatorkörpers deutlich verbessert und eine Blasenbildung im trocknen Polymerfilm unterbunden. So kann der Kondensatorkörper beispielsweise im ersten Schritt nur zur Hälfte in die Dispersion a) getränkt und anschließend getrocknet werden. In einem zweiten Tränkungsschritt kann der Kondensatorkörper dann vollständig in die Dispersion a) getaucht und anschließend getrocknet werden. Das Ausbilden des dünnen Films höherer Viskosität auf der Oberfläche der Dispersion a) kann beispielsweise durch einfaches Stehen lassen an offener Atmosphäre erreicht werden. Beschleunigen lässt sich die Filmbildung z.B. durch Erwärmen der Dispersion a) oder durch Erhitzen der Dispersionsoberfläche mit warmer Luft oder Wärmestrahlung.

Bevorzugt werden Dispersionen a) eingesetzt, die im getrockneten Zustand eine spezifische Leitfähigkeit von größer 1 S/cm, besonders bevorzugt größer 10 S/cm, ganz besonders bevorzugt größer 20 S/cm und überaus bevorzugt größer 50 S/cm aufweisen.

Auch an die Aufbringung der polymeren Außenschicht können sich Trocknung, Reinigung der Schicht durch Waschen, Reformierung und mehrmaliges Aufbringen - wie vorangehend bereits für die Herstellung des Feststoffelektrolyten beschrieben - anschließen. Bei einer Trocknung wird bevorzugt das Dispersionsmittel d) entfernt. Es kann aber auch mindestens ein Teil des Dispersionsmittels d) in der polymeren Außenschicht verbleiben. Je nach verwendetem Binder c) oder Vernetzer können auch weitere Behandlungsschritte wie z.B. Aushärtung oder Vernetzung durch Temperatur oder Licht angewendet werden. Ferner können weitere Schichten auf die polymere Außenschicht aufgebracht werden.

Überraschenderweise wurde gefunden, dass für metalloxidische Dielektrika nach Auftragung und Trocknung der Dispersion a) keine weiteren Behandlungsschritte der Schicht erforderlich sind, um Feststoffelektrolytkondensatoren mit niedrigem ESR und niedrigem Reststrom zu fertigen. Üblicherweise muss bei anderen Verfahren zur Herstellung einer polymeren Außenschicht die Oxidschicht nach Aufbringen der leitfähigen polymeren Außenschicht reformiert werden, um niedrige Restströme zu erzielen. Durch diese Reformierung in einem Elektrolyten kann sich die polymere Außenschicht lokal vom Kondensatorkörper ablösen, wodurch der ESR erhöht wird. Bei Verwendung des erfindungsgemäßen Verfahrens kann die Reformierung entfallen, ohne dass sich dadurch der Reststrom erhöht.

Nach Herstellung der polymeren Außenschicht werden auf den Kondensator bevorzugt gegebenenfalls weitere gut leitfähige Schichten wie beispielsweise Graphit- und/oder Silberschichten aufgebracht, der Kondensator kontaktiert und verkapselt.

Zur Herstellung des Elektrodenkörpers werden bevorzugt die oben für den Elektrolytkondensator aufgeführten Ventilmetalle oder Verbindungen mit vergleichbaren elektrischen Eigenschaften verwendet. Vorzugsbereiche gelten entsprechend.

Die oxidierbaren Metalle werden beispielsweise in Pulverform zu einem porösen Elektrodenkörper gesintert oder es wird einem metallischen Körper eine poröse Struktur aufgeprägt. Letzteres kann z.B. durch Ätzen einer Folie erfolgen.

Die porösen Elektrodenkörper werden beispielsweise in einem geeigneten Elektrolyten, wie z.B. Phosphorsäure, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Spannungen sind 1 bis 300 V, besonders bevorzugt 1 bis 80V.

Bevorzugt werden zur Herstellung des Elektrodenkörpers Metallpulver mit einer spezifischen Ladung größer als 35000 μC/g, besonders bevorzugt mit einer spezifischen Ladung größer 45000 μC/g, ganz besonders bevorzugt mit einer spezifischen Ladung größer 65000 μC/g, überaus bevorzugt mit einer spezifischen Ladung größer 95000 μC/g verwendet. In bevorzugten Ausführungsformen des erfindungsgemäßen Verfahrens werden Metallpulver mit einer spezifischen Ladung größer 140000 µC/g eingesetzt.

Die spezifische Ladung berechnet sich dabei wie folgt:

**Spezifische Ladung = (Kapazität * Spannung)/ Gewicht des oxidierten Elektrodenkörpers.**

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt. Beispielsweise werden 18 %ige wässrige Schwefelsäure-Elektrolyte zur Messung eingesetzt. Die Spannung in obiger Formel entspricht der maximalen Formierspannung (Oxidationsspannung).

Mit dem erfindungsgemäßen Verfahren lassen sich auf besonders einfache Weise Feststoffelektrolytkondensatoren mit einer dichten polymeren Außenschicht, die eine guten Kantenbelegung und Haftung aufweisen, herstellen. Die Kondensatoren zeichnen sich gleichzeitig durch niedrige Restströme und einen niedrigen ESR aus.

Die erfindungsgemäß hergestellten Elektrolytkondensatoren eignen sich aufgrund ihres niedrigen Reststroms und ihres niedrigen ESR hervorragend zur Verwendung als Bauteil in elektronischen Schaltungen. Die Verwendung ist auch Gegenstand der Erfindung. Bevorzugt sind digitale elektronische Schaltungen, wie sie sich beispielsweise in Computern (Desktop, Laptop, Server), in tragbaren elektronischen Geräten, wie z.B. Mobiltelefone und Digitalkameras, in Geräten der Unterhaltungselektronik, wie z.B. in CD/DVD Spielern und Computerspielkonsolen, in Navigationssystemen und in Telekommunikationseinrichtungen befinden.

## Beispiele

**Beispiel 1:** Herstellung einer erfindungsgemäßen Dispersion

1.1 Herstellung von leitfähigen Teilchen b)

In einem 2 l Dreihalskolben mit Rührer und Innenthermometer wurden 868 g entionisiertes Wasser, 330 g einer wässrigen Polystyrolsulfonsäurelösung mit einem mittleren Molekulargewicht von 70000 und einem Feststoffgehalt von 3,8 Gew.-% vorgelegt. Die Reaktionstemperatur wurde zwischen 20 und 25°C gehalten.

Unter Rühren wurden 5,1 g 3,4-Ethylendioxythiophen zugegeben. Die Lösung wurde 30 Minuten gerührt. Anschließend wurden 0,03 g Eisen(III)-sulfat und 9,5 g Natriumpersulfat zugegeben und die Lösung weitere 24 h gerührt.

Nach Abschluss der Reaktion wurden zur Entfernung anorganischer Salze 100 ml eines starksauren Kationenaustauschers und 250 ml eines schwachbasischen Anionenaustauschers zugegeben und die Lösung weitere 2 h gerührt. Der Ionenauschtauscher wurde abfiltriert.

Die erhaltene Poly(3,4-ethylendioxythiophen)/Potystyrolsuffonat-Dispersion hatte einen Feststoffgehaltvon 1,2 Gew.-% und folgende Teilchendurchmesserverteilung:

d10 100 nm

d50 141 nm

d90 210 nm

Die Durchmesserverteilung der Teilchen b) des leitfähigen Polymers bezieht sich auf eine Massenverteilung der Teilchen b) in der Dispersion in Abhängigkeit vom Teilchendurchmesser. Die Bestimmung erfolgte über eine Ultrazentrifugenmessung.

1.2 Herstellung von Feststoffpartikel e) (PEDT-Toluolsulfonat-Pulver)

In einem 5 l-Glasreaktor mit Rührer und Thermometer wurden 2,5 1 demineralisiertes Wasser vorgelegt. Unter Rühren wurden 214,2 g p-Toluolsufonsäure-monohydrat und 2,25 g Eisen(III)sulfat-heptahydrat eingetragen. Nachdem sich alles gelöst hatte, wurden 85,8 g 3,4-Ethylendioxythiophen zugegeben und 30 Minuten gerührt. Anschließend wurden 192,9 g Natriumperoxodisulfat unter Rühren eingetragen und die Mischung weitere 24 Stunden bei Raumtemperatur gerührt. Nach Reaktionsende wurde das entstandene PEDT/Toluolsulfonat-Pulver auf einer Porzellannutsche abfiltriert, mit 3 1 demineralisiertem Wasser gewaschen und zuletzt 6 Stunden bei 100°C getrocknet. Man erhielt 89 g eines blauschwarzen PEDT-Toluolsufonat-Pulvers.

1.3 Herstellung einer erfindungsgemäßen Dispersion a)

In einem Becherglas mit Rührer wurden 170 g PEDT/PSS-Dispersion hergestellt gemäß Beispiel 1.1, 15 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 6 g PEDT/Toluolsulfonat-Pulver (Herstellung gemäß Beispiel 1.2) mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8μm Sieb abgetrennt. Die Dispersion wies einen Feststoffgehalt von 7,0 % auf.

**Beispiel 2:** Herstellung von Kondensatoren

2.1 Herstellung von oxidierten Elektrodenkörpern

Tantalpulver mit einer spezifischen Kapazität von 50 000 μFV/g wurde unter Einschluss eines Tantaldrahtes 7 zu Pellets 2 gepresst und gesintert, um einen porösen Elektrodenkörper 2 mit den Abmessungen 4,2 mm * 3 mm* 1 mm zu bilden. Die Elektrodenkörper 2 wurden in einem Phosphorsäureelektrolyten auf 30 V anodisiert.

2.2 Chemische in-situ Beschichtung der Elektrodenkörper

Es wurde eine Lösung, bestehend aus einem Gewichtsteil 3,4-Ethylendioxythiophen (BAYTRON® M, H.C. Starck GmbH) und 20 Gewichtsteilen einer 40 Gew.-%igen ethanolischen Lösung von Eisen(III)-p-toluolsulfonat (BAYTRON® C-E, H.C. Starck GmbH) hergestellt.

Die Lösung wurde zur Imprägnierung von 9 anodisierten Elektrodenkörper 2 verwendet. Die Elektrodenkörper 2 wurden in dieser Lösung getränkt und anschließendfür30 min bei Raumtemperatur (20°C) getrocknet. Danach wurden sie 30 min bei 50°C in einem Trockenschrank wärmebehandelt. Anschließend wurden die Elektrodenkörper in einer 2 Gew.-% igen wässrigen Lösung von p-Toluolsäure 30 min lang gewaschen. Die Elektrodenkörper wurden 30 min in einer 0,25 Gew.-% wässrigen Lösung von p-Toluolsulfonsäure reformiert, anschließend in destilliertem Wasser gespült und getrocknet. Die beschriebene Tränkung, Trocknung, Temperaturbehandlung und Reformierung wurde mit denselben Elektrodenkörpern noch zwei weitere Male durchgeführt.

2.3 Herstellung einer polymeren Außenschicht

Die 9 in-situ beschichteten Elektrodenkörper wurden anschließend in der erfindungsgemäßen Dispersion aus Beispiel 1.3 einmal getränkt und anschließend 10 min bei 120°C getrocknet.

Die Elektrodenkörper wurden nach Aufbringen der polymeren Außenschicht 5 unter einem Lichtmikroskop betrachtet: Die Elektrodenkörper waren auf der gesamten äußeren Oberfläche mit einem dichten Polymerfilm belegt: Auch die Kanten und Ecken zeigten eine durchgehende Polymerfilmbelegung. Die Dicke des polymeren Außenfilms betrug ca. 40 μm.

Abschließend wurden die Elektrodenkörper mit einer Graphit- und Silberschicht überzogen.

**Vergleichsbeispiel 1:**

2.4 Herstellung einer nicht erfindungsgemäßen Dispersion

In einem Becherglas mit Rührer wurden 170 g PEDT/PSS-Dispersion hergestellt gemäß Beispiel 1.1, 15 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt.

2.5 Herstellung von Kondensatoren

Es wurden analog zu Beispiel 2.1 und 2.2. 9 oxidierte Elektrodenkörper hergestellt und in-situ beschichtet. Die 9 Elektrodenkörper wurden anschließend in der Dispersion aus Beispiel 2.4 einmal getränkt und anschließend 10 min bei 120°C getrocknet.

Die Elektrodenkörper wurden nach Aufbringen der polymeren Außenschicht 5 unter einem Lichtmikroskop betrachtet: Die Elektrodenkörper mit der polymeren Außenschicht 5 zeigten insbesondere an den Ecken und Kanten der Anode keine Polymerfilmbelegung.

Abschließend wurden die Elektrodenkörper mit einer Graphit und Silberschicht überzogen.

Die 9 Kondensatoren aus Beispiel 2 und Vergleichsbeispiel 1 hatten im Mittel jeweils folgende elektrischen Restströme:

| | Reststrom [μA] | Belegung mit polymerer Außenschicht |
|---|---|---|
| Beispiel 2 (erfindungsgemäße Dispersion) | 11,6 | 100% |
| Vergleichsbeispiel 1 | 64,8 | Ecken und Kanten liegen frei |

Der Reststrom wurde drei Minuten nach Anlegen einer 10 V Spannung mit einem Keithley 199 Multimeter bestimmt.

Die nach dem erfindungsgemäßen Verfahren unter Verwendung von Dispersionen enthaltend Feststoffpartikel e) hergestellten Kondensatoren zeigten aufgrund der besseren Belegung mit einer polymeren Außenschicht 5 deutlich niedrigere Restströme auf. Im nicht erfindungsgemäßen Verfahren mit Dispersionen enthaltend keine Feststoffpartikel e) kamen die Graphit- und Silberschicht in direkten Kontakt mit dem Dielektrikum, so dass ein hoher Reststrom entstand.

**Beispiel 3:** Herstellung einer erfindungsgemäßen Dispersion

In einem Becherglas mit Rührer wurden 180 g PEDT/PSS-Dispersion hergestellt gemäß Beispiel 1.1, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g PEDT/Toluolsulfonat-Pulver (Herstellung gemäß Beispiel 1.2) mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8μm Sieb abgetrennt. Die Dispersion wies einen Feststoffgehalt von 4,7 % auf.

Die Verteilung der Feststoffpartikel in der Dispersion wurde mittels Laserbeugung (MS 2000 Hydro S) bestimmt. Es ergaben sich folgende Werte der Durchmesserverteilung

$d_{10}$: 1,5 μm
$d_{50}$: 3,0 μm (mittlerer Durchmesser)
$d_{90}$: 6,6 μm

**Beispiel 4:** Herstellung einer erfindungsgemäßen Dispersion

In einem Becherglas mit Rührer wurden 180 g PEDT/PSS-Dispersion hergestellt gemäß Beispiel 1.1, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g einer gefällten Kieselsäure (Acematt OK 607, Degussa, mittlerer Teilchendurchmesser 4,5 μm) zugesetzt und die Mischung mittels eines Dissolvers (Scheibendurchmesser 6 cm, 5000 U/min) 1 Stunde unter Kühlung gerührt. Die so erhaltene Dispersion wies einen Feststoffgehalt von 4,2 % auf.

**Beispiel 5:** Herstellung einer erfindungsgemäßen Dispersion

In einem Becherglas mit Rührer wurden 180 g PEDT/PSS-Dispersion hergestellt gemäß Beispiel 1.1, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g einer pyrogenen Kieselsäure (A-cematt TS 100, Degussa, mittlerer Teilchendurchmesser 10 μm) zugesetzt und die Mischung mittels eines Dissolvers (Scheibendurchmesser 6 cm, 5000 U/min) 1 Stunde unter Kühlung gerührt. Die so erhaltene Dispersion wies einen Feststoffgehaft von 4,3 % auf.

**Vergleichsbeispiel 2:**

In einem Becherglas mit Rührer wurden 180 g PEDT/PSS-Dispersion hergestellt gemäß Beispiel 1.1, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g einer pyrogenen Kieselsäure (A-cematt TS 100, Degussa, mittlerer Teilchendurchmesser 0,012 μm) zugesetzt und die Mischung mittels eines Dissolvers (Scheibendurchmesser 6 cm, 5000 U/min) 1 Stunde unter Kühlung gerührt. Die so erhaltene Dispersion wies einen Feststoffgehalt von 4,2 % auf.

Es wurden analog zu Beispiel 2.1 und 2.2. oxidierte Elektrodenkörper hergestellt und in-situ beschichtet. Je 9 Elektrodenkörper wurden anschließend in der Dispersion aus den Beispielen 3, 4, und 5 und dem Vergleichsbeispiel 2 einmal getränkt und anschließend 10 min bei 120°C getrocknet.

Die Elektrodenkörper wurden nach Aufbringen der polymeren Außenschicht 5 unter einem Lichtmikroskop betrachtet und die Belegung mit der polymeren Außenschicht 5 optisch beurteilt.

Abschließend wurden die Elektrodenkörper mit einer Graphit und Silberschicht überzogen.

Der Reststrom wurde drei Minuten nach Anlegen einer 10 V Spannung mit einem Keithley 199 Multimeter bestimmt. Der äquivalente Serienwiderstand (ESR) wurde bei 100 kHz mittels eines LCR Meters (Agilent 4284A) bestimmt.

| | Mittlerer Durchmesser der Feststoffpartikel [μm] | Belegung | Reststrom [μA] | ESR [mΩ] |
|---|---|---|---|---|
| Beispiel 3 | 3 | 100% | 7 | 17,1 |
| Beispiel 4 | 4,5 | 100% | 6 | 16,0 |
| Beispiel 5 | 10 | 100% | 10 | 15,5 |
| Vergleichsbeispiel 2 | 0,012 | Ecken und Kanten liegen frei | 78 | 17,7 |

Die nach dem erfindungsgemäßen Verfahren hergestellten Kondensatoren (Beispiel 3, 4 und 5) wiesen eine 100%ige Belegung mit einem äußeren Polymerfilm und einen niedrigen Reststrom auf. Sehr feine Feststoffpartikel in der Dispersion, aus der der polymere Außenfilm erzeugt wird, führen nicht zu einer guten Belegung (Vergleichsbeispiel 2). Insbesondere lagen hier die Ecken und Kanten der Elektrodenkörper frei, was zu einem hohen Reststrom führte.

**Beispiel 6:** Herstellung einer erfindungsgemäßen Dispersion

In einem Becherglas mit Rührer wurden 182,2 g PEDT/PSS-Dispersion hergestellt gemäß Beispiel 1.1, 1,1 g Dimethylethanolamin (50%ige Lösung in Wasser), 6,4 g eines Epoxy-Novolak-Harzes (EPI-REZ6006 W-70, Resolution), 10 g Ethylenglykol, 1 g 3-Glycidoxypropyltrimethoxysilan (SilquestA-187, OSi Specialties) und 0,4 g Netzmittel (Surfynol E-104, Air Products) eine Stunde intensiv gemischt. Anschließend wurden 4 g PEDT/Toluolsulfonat-Pulver (Herstellung gemäß Beispiel 1.2) mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8μm Sieb abgetrennt. Die Dispersion wies einen Feststoffgehalt von 4,8 % auf.

**Vergleichsbeispiel 3:** Herstellung einer nicht-erfindungsgemäßen Dispersion

Es wurde eine Dispersion analog zu Beispiel 6 hergestellt, jedoch ohne den Zusatz und die Eindispergierung von PEDT/Toluolsulfonat-Pulver.

Beispiel 7: Herstellung einer erfindungsgemäßen Dispersion

In einem Becherglas mit Rührer wurden 161,6 g PEDT/PSS-Dispersion hergestellt gemäß Beispiel 1.1, 30 g eines Perfluorsulfonsäure-Tetrafluorethylen-Copolymers (Liquion 1115, Ion Power), 8 g Dimethylsulfoxid und 0,4 g Netzmittel (Zonyl FS-300, DuPont) eine Stunde intensiv gemischt. Anschließend wurden 5 g PEDT/Toluolsulfonat-Pulver (Herstellung gemäß Beispiel 1.2) mittels einer Perlmühle-Dissolver-Einheirt eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8μm Sieb abgetrennt. Die Dispersion wies einen Feststoffgehalt von 5,8 % auf.

**Vergleichsbeispiel 4:** Herstellung einer nicht-erfindungsgemäßen Dispersion

Es wurde eine Dispersion analog zu Beispiel 7 hergestellt, jedoch ohne den Zusatz und die Eindispergierung von PEDT/Toluolsulfonat-Pulver.

**Beispiel 8:** Herstellung einer erfindungsgemäßen Dispersion

In einem Becherglas mit Rührer wurden 186,6 g PEDT/PSS-Dispersion hergestellt gemäß Beispiel 1.1, 1,1 g

Dimethylethanolamin (50%ige Lösung in Wasser), 5,0 g einer wässrigen Phenolharzdispersion (Phenodur VPW 1942, Cytec Industries), 8 g Dimethylsulfoxid, und 0,4 g Netzmittel (Dynol 604, Air Products) eine Stunde intensiv gemischt. Anschließend wurden 5 g PEDT/Toluolsulfonat-Pulver (Herstellung gemäß Beispiel 1.1) mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8μm Sieb abgetrennt. Die Dispersion wies einen Feststoffgehaft von 5,5 % und einen pH-Wert von 6.8 auf.

**Vergleichsbeispiel 5:** Herstellung einer nicht-erfindungsgemäßen Dispersion

Es wurde eine Dispersion analog zu Beispiel 8 hergestellt, jedoch ohne den Zusatz und die Eindispergierung von PEDT/Toluolsulfonat-Pulver.

**Beispiel 9:** Herstellung einer erfindungsgemäßen Dispersion

In einem Becherglas mit Rührer wurden 183 g PEDT/PSS-Dispersion hergestellt gemäß Beispiel 1.1, 8,6 g einer wässrigen Dispersion eines Acrylat-Copolymeren (Carbopol Aqua 30, Noveon), 8 g Ethylenglykol und 0,4 g Netzmittel (Dynol 604, Air Products) eine Stunde intensiv gemischt. Anschließend wurden 5 g PEDT/Toluolsulfonat-Pulver (Herstellung gemäß Beispiel 1.1) mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8μm Sieb abgetrennt. Die Dispersion wies einen Feststoffgehalt von 5,0 % auf.

**Vergleichsbeispiel 6:** Herstellung einer nicht-erfindungsgemäßen Dispersion

Es wurde eine Dispersion analog zu Beispiel 9 hergestellt, jedoch ohne den Zusatz und die Eindispergierung von PEDT/Toluolsulfonat-Pulver.

Es wurden analog zu Beispiel 2.1 und 2.2. oxidierte Elektrodenkörper hergestellt und in-situ beschichtet. Es wurden anschließendjeweils Elektrodenkörperin einer der Dispersionen aus den Beispielen 6 bis 9 bzw. derDispersionen aus den Vergleichsbeispielen 3 bis 6 einmal getränkt und anschließend 10 min bei 120°C getrocknet.

Die Elektrodenkörper wurden nach Aufbringen der polymeren Außenschicht 5 unter einem Lichtmikroskop betrachtet und die Belegung mit der polymeren Außenschicht 5 optisch beurteilt.

| | Belegung |
|---|---|
| Beispiel 6 | 100% |
| Vergleichsbeispiel 3 | Ecken und Kanten liegen frei |
| Beispiel 7 | 100 % |
| Vergleichsbeispiel 4 | Ecken und Kanten liegen frei |
| Beispiel 8 | 100% |
| Vergleichsbeispiel 5 | Ecken und Kanten liegen frei |
| Beispiel 9 | 100% |
| Vergleichsbeispiel 6 | Ecken und Kanten liegen frei |

Die erfindungsgemäßen Formulierungen aus den Beispielen 6 bis 9 bildeten nach Auftragung auf die Elektrodenkörper alle eine polymeren Außenschicht, die die Elektrodenkörper zu 100% bedeckt. Nach Beschichtung mit den nicht-erfindungsgemäßen Formulierungen aus den Vergleichsbeispielen 3 bis 6, die keine Feststoffpartikel e) enthalten, liegen die Kanten und Ecken der Elektrodenkörper frei.

**Beispiel 10:** Herstellung einer erfindungsgemäßen Dispersion

In einem Becherglas mit Rührer wurden 180 g PEDT/PSS-Dispersion hergestellt gemäß Beispiel 1.1, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g PEDT/Toluolsulfonat-Pulver (Herstellung gemäß Beispiel 1.2) mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser

bei 7000U/min gerührt. Zuletzt wurden die Mahlperlen über ein 0,8μm Sieb abgetrennt. Durch Abdampfen von Wasser mittels Vakuum wurde anschließend eine Viskosität von 390 mPas, gemessen bei 100 Hz mit einem Haake Rotovisco 1 eingestellt.

**Vergleichsbeispiel 7:** Herstellung einer nicht erfindungsgemäßen Dispersion

In einem Becherglas mit Rührer wurden 180 g PEDT/PSS-Dispersion hergestellt gemäß Beispiel 1.1, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Durch Abdampfen von Wasser mittels Vakuum wurde anschließend eine Viskosität von 360 mPas, gemessen bei 100 Hz mit einem Haake Rotovisco 1 eingestellt.

Oxidierte Elektrodenkörper aus Aluminium, bestehend aus einer aufgerauten und oxidierten Aluminiumfolie der Größe 4mm*4mm*1mm, wurden anschließend mit der erfindungsgemäßen Dispersion aus Beispiel 10 bzw. mit der nicht erfindungsgemäßen Dispersion aus Vergleichsbeispiel 7 getränkt, anschließend 10 min bei 120°C getrocknet, erneut getränkt und wieder getrocknet. Die Elektrodenkörper wurden nach Aufbringen der polymeren Außenschicht 5 unter einem Lichtmikroskop betrachtet und die Belegung mit der polymeren Außenschicht 5 optisch beurteilt: Die Elektrodenkörper, die mit der Dispersion aus Beispiel 10 beschichtet wurden, wiesen eine komplette Belegung aller Kanten auf. Die Elektrodenkörper, die mit der Dispersion aus dem Vergleichsbeispiel 7 beschichtet wurden, wiesen auf den Kanten keinen Polymerfilm auf. Mit den erfindungsgemäßen Dispersionen lassen sich folglich auch sehr scharfe Kanten, wie sie bei Elektrodenkörpern auftreten, die aus Folien hergestellt wurden, sehr gut belegen.

Es wurden analog zu den Beispielen 2.1 und 2.2. oxidierte Elektrodenkörper hergestellt und in-situ beschichtet. Es wurden anschließend jeweils Elektrodenkörper in der Dispersion aus Beispiel 10 bzw. aus dem Vergleichsbeispiel 7 einmal getränkt und anschließend 10 min bei 120°C getrocknet. Die Elektrodenkörper wurden nach Aufbringen der polymeren Außenschicht 5 unter einem Lichtmikroskop betrachtet und die Belegung mit der polymeren Außenschicht 5 optisch beurteilt: Die Elektrodenkörper, die mit der Dispersion aus Beispiel 10 beschichtet wurden, zeichneten sich durch eine homogene polymere Außenschicht aus. Die Elektrodenkörper, die mit der Dispersion aus dem Vergleichsbeispiel 7 beschichtet wurden, wiesen Krater und Risse im polymeren Außenfilm auf. Die erfindungsgemäßen Dispersionen ermöglichen den Einsatz hoher Viskositäten zur Beschichtung, ohne dass es dadurch zurRiss-oder Kraterbildung kommt.

**Beispiel 11:** Herstellung von Aluminiumkondensatoren

Es wurde eine Lösung, bestehend aus einem Gewichtsteil 3,4-Ethylendioxythiophen (BAYTRON® M, H.C. Starck GmbH) und 20 Gewichtsteilen einer 40 Gew.%igen ethanolischen Lösung von Eisen(III)-p-toluolsulfonat (BAYTRON® C-E, H.C. Starck GmbH) hergestellt. Die Lösung wurde zur Imprägnierung von 12 oxidierten Elektrodenkörper aus geätzter und anodisierter Aluminiumfolie der Größe 4mm*4mm*1mm verwendet. Die oxidierten Elektrodenkörper wurden in dieser Lösung getränkt und anschließend für 30 min bei Raumtemperatur (20°C) getrocknet. Danach wurden sie 30 min bei 50°C in einem Trockenschrank wärmebehandelt. Anschließend wurden die Elektrodenkörper in Wasser 30 min lang gewaschen und danach getrocknet.

Es wurde eine Dispersion gemäß Beispiel 10 hergestellt. Der pH-Wert der Dispersion wurde durch Zusatz von Trimethylethanolamin auf 6,7 eingestellt. Die Elektrodenkörper wurden in der Dispersion getränkt, anschließend 10 min bei 120°C getrocknet, erneut getränkt und wieder getrocknet. Abschließend wurden die Elektrodenkörper mit einer Graphit und Silberschicht überzogen.

Die 12 Aluminiumkondensatoren hatten im Mittel folgende elektrischen Werte:

Kapazität: 3,5 μF
ESR: 73 mΩ
Reststrom: 7 μA

Der Reststrom wurde drei Minuten nach Anlegen einer 6 V Spannung mit einem Keithley 199 Multimeter bestimmt. Die Kapazität wurde bei 120 Hz und der äquivalente Serienwiderstand (ESR) bei 100 kHz mittels eines LCR Meters (Agilent 4284A) bestimmt.

**Beispiel 12:** Messung der mittleren Rauhigkeit der polymeren Außenschicht

Es wurden analog zu den Beispielen 2.1 und 2.2. oxidierte Elektrodenkörper hergestellt und in-situ beschichtet. Ein Teil der Elektrodenkörper wurde anschließend in der Dispersion aus Beispiel 10 einmal getränkt und anschließend 10 min bei 120°C getrocknet.

Die mittlere Rauhigkeit der beschichteten Elektrodenkörper wurde mit einem Tencor Alpha Step 500 Surface Profiler bestimmt. Sie betrug für die nur insitu beschichteten Elektrodenkörper 0,4 μm. Für die Elektrodenkörper, die zusätzlich mit der erfindungsgemäßen Dispersion beschichtet wurden, betrug die mittlere Rauhigkeit 0,5 μm. Obwohl die erfindungsgemäße Dispersion Feststoffpartikel e) enthält, erhöht sie die Rauhigkeit des Elektrodenkörpers nicht signifikant. Die Teilchen b) des elektrisch leitfähigen Polymers füllen die Zwischenräume der Feststoffpartikel aus und führen damit zu einer Glättung des polymeren Außenfilms.

**Beispiel 13:** Herstellung einer leitfähigen Schicht

Es wurde eine leitfähige Schicht aus der Dispersion aus Beispiel 1.3 und aus der Dispersion aus Beispiel 10 hergestellt. Dazu wurde jeweils ein Teil der Dispersion auf einen Glasobjektträger (26 mm*26 mm* 1 mm) mittels eines Spincoaters (Chemat Technology KW-4A) bei 1000 U/min für 5 Sekunden aufgeschleudert. Die Probe wurde 10 min bei 120°C getrocknet. Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Obemächenwiderstand ermittelt. Die Schichtdicke wurde mit einem Tencor Alpha Step 500 Surface Profiler bestimmt. Aus Oberflächenwiderstand und Schichtdicke wurde die spezifische Leitfähigkeit ermittelt.

Es ergaben sich folgende Werte für Schichtdicke und elektrische Leitfähigkeit:

| | Schichtdicke [μm] | Leitfähigkeit [S/cm] |
|---|---|---|
| Beispiel 1.3 | 1,5 | 28 |
| Beispiel 10 | 1,3 | 63 |

**Patentansprüche**

1. Verfahren zur Herstellung eines Elektrolytkondensators, bei dem auf einen Kondensatorkörper (1), wenigstens umfassend
einen porösen Elektrodenkörper (2) eines Elektrodenmaterials,
ein Dielektrikum (3), das die Oberfläche dieses Elektrodenmaterials bedeckt,
einen Feststoffelecktrolyten (4) wenigstens enthaltend ein elektrisch leitfähiges Material, der die Dielektrikumsoberfläche ganz oder teilweise bedeckt.
eine Dispersion a) aufgebracht wird, die wenigstens
Teilchen b) eines elektrisch leitfähigen Polymers, die wenigstens ein gegebenenfalls substituiertes Polyanilin und/oder ein Polythiophen mit wiederkehrenden Einheiten der allegemeinen Formel (I) oder der Formel (II) oder wiederkehrenden Einheiten der allgemeinen Formeln (I) und (II) enthalten,

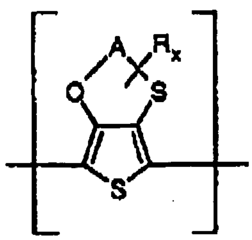
(I)

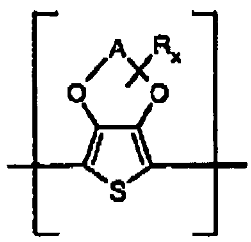
(II)

worin

A für einen gegebenenfalls substituierten $C_1$-$C_5$-Alkylenrest steht,
R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,
x für eine ganze Zahl von 0 bis 8 steht und

für den Fall, dass mehrere Reste R an A gebunden sind, diese gleich oder unterschiedlich sein können,
und einen Binder c) und ein Dispersionsmittel d) enthält,

und zur Bildung einer elektrisch leitfähigen polymeren Außenschicht gegebenenfalls das Dispersionmittel d) wenigstens teilweise entfernt und/oder der Binder c) ausgehärtet wird,
**dadurch gekennzeichnet, dass** der Anteil der Teilchen b) des leitfähigen Polymers in der Dispersion a) mit einem Durchmesser kleiner 700 nm einen Feststoffgehalt von mindestens 5 Gew.-% des Feststoffgehalts der Dispersion ausmacht,
und dass zusätzlich zu den Komponenten b) bis d) noch Feststoffpartikel e) mit einem Durchmesser im Bereich von 0,7 bis 20 μm in der Dispersion a) enthalten sind, wobei der Anteil an Feststoffpartikeln e) in der Dispersion a) mindestens 5 Gew.-% des Feststoffanteils der Dispersion a) beträgt.

2. Verfahren gemäß Anspruch 1, **dadurch gekennzeichnet, dass** die Teilchen b) des leitfähigen Polymera in der Dispersion a) einen mittleren Durchmesser von 5 bis 500 nm besitzen.

3. Verfahren gemäß wenigstens einem der Ansprüche 1 bis 2, **dadurch gekennzeichnet, dass** die Feststoffpartikel e) organische oder anorgische Partikel oder eine Mischung davon sind.

4. Verfahren gemäß wenigstens einem der Ansprüche 1 bis 3, **dadurch gekennzeichnet, dass** die Feststoffpartikel e) auf Füllstoffen, auf elektrisch leitfähigem Polymer, oder auf anorganischen Stoffen basieren.

5. Verfahren gemäß Anspruch 4, **dadurch gekennzeichnet, dass** die anorganischen Stoffe gefällte Kleselsäure, pyrogene Rieselsäure oder Kieselsole darstellen.

6. Verfahren gemäß Anspruch 4, **dadurch gekennzeichnet, dass** das elektrisch leitfähigen Polymer Poly(3,4-ethylendioxythiophen) darstellt.

7. Verfahren gemäß wenigstens einem der Ansprüche 1 bis 6, **dadurch gekennzeichnet, dass** das Polythiophen der Teilchen b) in der Dispersion a) Poly (3,4-ethylendioxythiophen) ist.

8. Verfahren gemäß wenigstens einem der Ansprüche 1 bis 7, **dadurch gekennzeichnet, dass** die Dispersion a) zusätzlich wenigstens ein polymeres Anion enthält.

9. Verfahren gemäß Anspruch 8, **dadurch gekennzeichnet, dass** das polymere Anion ein Anion einer polymeren Carbon- oder Sulfonsäure, bevorzugt Polystyrolsulfonsäure ist.

10. Verfahren gemäß wenigstens einem der Ansprüche 1 bis 9, **dadurch gekennzeichnet, dass** der in der Dispersion a) enthaltene Binder c) ein polymerer organischer Binder ist.

11. Verfahren gemäß wenigstens einem der Ansprüche 1 bis 10, **dadurch gekennzeichnet, dass** das Verhältnis des Feststoffanteils (Gew.-%) des Binders c) zum Feststoffanteil der Feststoffpartikel e) größer als 1:2, besonders bevorzugt von größer als 1:1 ist.

12. Verfahren gemäß wenigstens einem der Ansprüche 1 bis 11, **dadurch gekennzeichnet, dass** die Dispersion a) vor dem Aufbringen auf einen pH Wert von 1 bis 8 eingestellt ist.

13. Verfahren gemäß wenigstens einem der Ansprüche 1 bis 12, **dadurch gekennzeichnet, dass** die Viskosität der Dispersion a) von 10 bis 1500 mPa·s, gemessen bei einer Scherrate von 100 $s^{1}$, beträgt.

14. Verfahren gemäß wenigstens einem der Ansprüche 1. bis 13, **dadurch gekennzeichnet, dass** die Dispersion a) als Dispersionsmittel d) organische Lösungsmittel, Wasser oder Mischungen aus organischem Lösungsmittel und Wasser enthält.

15. Verfahren gemäß wenigstens einem der Ansprüche 1 bis 14, **dadurch gekennzeichnet, dass** die Dispersion a) zusätzlich Vernetzer und/oder oberflächenaktive Substanzen und/oder weitere Additive enthält.

16. Verfahren gemäß Anspruch 15, **dadurch gekennzeichnet, dass** die Dispersion a) als weitere Additive ether-, lacton-, amid- oder lactamgruppenhaltige Verbindungen, Sulfone, Sulfoxide, Zucker, Zuckerderivate, Zuckeralkohole, Furanderivate und/oder Di- oder Polyalkohole enthält.

17. Verfahren gemäß wenigstens einem der Ansprüche 1 bis 16, **dadurch gekennzeichnet, dass** die Dispersion a)

bei einem pH empfindlichen Dielektrikum auf einen pH Wert von 4 - 8 eingestellt ist.

**18.** Verfahren gemäß wenigstens einem der Ansprüche 1 bis 17, **dadurch gekennzeichnet, dass** der Anteil an Partikeln e) in der Dispersion a) mindestens 10 Gew.-% des Feststoffanteils der Dispersion a), bevorzugt mindestens 15 Gew.-%, beträgt.

**19.** Verfahren gemäß wenigstens einem der Ansprüche 1 bis 18, **dadurch gekennzeichnet, dass** in der Dispersion a) der Anteil der Teilchen b) mit einem Durchmesser kleiner 700 nm, bezogen auf ihren Feststoffgehalt, mindestens 10 Ges.-%, besonders bevorzugt mindestens 15 Gew.-% des Feststoffgehalts der Dispersion, beträgt.

**20.** Verfahren gemäß wenigstens einem der Ansprüche 1 bis 19, **dadurch gekennzeichnet, dass** die Feststoffpartikel e) in der Dispersion a) einen mittleren Durchmesser von 1 μm bis 10 μm, besonders bevorzugt einen mittleren Durchmesser von 1 μm bis 5 μm aufweisen.

**21.** Verfahren gemäß wenigstens einem der Ansprüche 1 bis 20, **dadurch gekennzeichnet, dass** die Feststoffpartikel e) in der Dispersion a) einen d10 Wert der Durchmesserverteilung von größer 0.9 μm und einen d90 Wert von kleiner 15 μm, aufweisen.

**22.** Verfahren gemäß wenigstens einem der Ansprüche 1 bis 21, **dadurch gekennzeichnet, dass** das leitfähige Material des Feststoffelektrolyten (4) ein leitfähiges Polymer ist.

**23.** Verfahren gemäß Anspruch 22, **dadurch gekennzeichnet, dass** das im Feststoffelektrolyten (4) enthaltene leitfähige Polymer ein Polythiophen, Polypyrrol oder Polyanilin ist, die gegebenenfalls substituiert sind.

**24.** Verfahren gemäß Anspruch 23, **dadurch gekennzeichnet, dass** im Feststoffelektrolyten (4) enthaltene leitfähige Polymer ein Polythiophen mit wiederkehrenden Einheiten der allgemeinen Formen (I) oder der Formel (II) oder wiederkehrenden Einheiten der allgemeinen Formeln (I) und (II) ist,

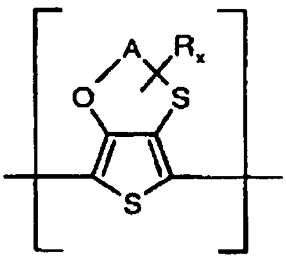 (I) 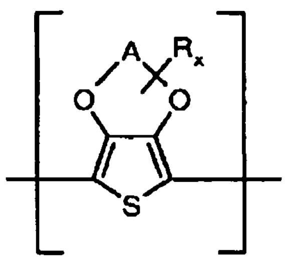 (II)

wobei die Reste A und R und der Index x die in Anspruch 1 genannte Bedeutung haben.

**25.** Verfahren gemäß Anspruch 24, **dadurch gekennzeichnet, dass** im Feststoffelektrolyten enthaltene leitfähige Polymer Poly(3,4-ethylendioxythiophen) ist.

**26.** Verfahren gemäß wenigstens einem der Ansprüche 1, bis 25, **dadurch gekennzeichnet, dass** der Feststoffelektrolyt monomere Anionen enthält.

**27.** Verfahren gemäß wenigstens einem der Ansprüche 1 bis 26, **dadurch gekennzeichnet, dass** es sich bei dem Elektrodenmaterial des Elektrodenkörpers (2) um ein Ventilmetall oder eine Verbindung mit einem Ventilmetall vergleichbaren elektrischen Eigenschaften handelt.

**28.** Verfahren gemäß Anspruch 27, **dadurch gekennzeichnet, dass** es sich bei dem Ventilmetall oder bei der Verbindung mit einem Ventilmetall vergleichbaren elektrischen Eigenschaften um Tantal, Niob, Aluminium, Titan, Zirkon, Hafnium, Vanadium, eine Legierung oder Verbindung von wenigstens einem dieser Metalle mit anderen Elementen oder NbO oder eine Legierung oder Verbindung von NbO mit anderen Elementen handelt

**29.** Verfahren gemäß wenigstens einem der Ansprüche 1 bis 28, **dadurch gekennzeichnet, dass** es sich bei dem

Dielektrikum um ein Oxid des Ventilmetalls oder ein Oxid der Verbindung mit einem Ventil metall vergleichbaren elektrischen Eigenschaften handelt.

**30.** Verfahren gemäß wenigstens einem der Ansprüche 1 bis 29, **dadurch gekennzeichnet, dass** nach Aufbringen der Dispersion a) und Bildung der elektrisch leitfähigen polymeren Außenschicht der Kondensator gegebenenfalls mit weiteren elektrisch leitfähigen Außenkontakten (6,7,8) versehen, gegebenenfalls kontaktiert und verkapselt wird.

**31.** Verfahren gemäß wenigstens einem der Ansprüche 1 bis 30, **dadurch gekennzeichnet, dass** nach Aufbringen der Dispersion a) und Bindung der polymeren Außenschicht die mittlere Schichtdicke der polymeren Außenschicht 1-100 μm beträgt.

## Claims

**1.** Process for the production of an electrolytic capacitor wherein a capacitor body (1) at least comprising
a porous electrode body (2) of an electrode material,
a dielectric (3) covering the surface of this electrode material,
a solid electrolyte (4) at least containing an electrically conductive material which wholly or partly covers the dielectric surface,
has applied to it a dispersion a) containing at least
particles b) of an electrically conductive polymer containing at least an optionally substituted polyaniline and/or a polythiophene with recurring units of general formula (I) or formula (II) or recurring units of general formulae (I) and (II)

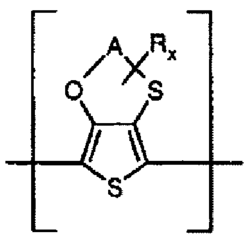 (I) 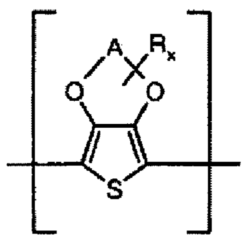 (II)

where

A represents an optionally substituted
$C_1$-$C_5$ alkylene radical,
R represents a linear or branched, optionally substituted $C_1$-$C_{18}$ alkyl radical, an optionally substituted $C_5$-$C_{12}$ cycloalkyl radical, an optionally substituted $C_6$-$C_{14}$ aryl radical, an optionally substituted $C_7$-$C_{18}$ aralkyl radical, an optionally substituted $C_1$-$C_4$ hydroxyalkyl radical or a hydroxyl radical,
x represents an integer from 0 to 8, and

when a plurality of radicals R are bound to A, these may be the same or different,
and a binder c) and a dispersing agent d),
and to form an electrically conductive polymeric outer layer optionally the dispersing agent d) is at least partially removed and/or the binder c) is cured,
**characterized in that** the fraction of particles b) of the conductive polymer in the dispersion a)
having a diameter of less than 700 nm constitutes a solids content of at least 5% by weight of the solids content of the dispersion,
and **in that**, in addition to the components b) to d), the dispersion a) additionally contains solid particles e) having a diameter in the range from 0.7 to 20 μm, the fraction of solid particles e) in the dispersion a) amounting to at least 5% by weight of the solid fraction of the dispersion a).

**2.** Process according to Claim 1, **characterized in that** the particles b) of the conductive polymer in the dispersion a) have an average diameter from 5 to 500 nm.

**3.** Process according to at least one of Claims 1 to 2, **characterized in that** the solid particles e) are organic or inorganic particles or a mixture thereof.

4. Process according to at least one of Claims 1 to 3, **characterized in that** the solid particles e) are based on fillers, on electrically conductive polymer or on inorganic materials.

5. Process according to Claim 4, **characterized in that** the inorganic materials represent precipitated silica, fumed silica or silica sols.

6. Process according to Claim 4, **characterized in that** the electrically conductive polymer represents poly(3,4-ethylenedioxythiophene).

7. Process according to at least one of Claims 1 to 6, **characterized in that** the polythiophene of the particles b) of the dispersion a) is poly-(3,4-ethylenedioxythiophene).

8. Process according to at least one of Claims 1 to 7, **characterized in that** the dispersion a) additionally contains at least one polymeric anion.

9. Process according to Claim 8, **characterized in that** the polymeric anion is an anion of a polymeric carboxylic or sulphonic acid, preferably polystyrenesulphonic acid.

10. Process according to at least one of Claims 1 to 9, **characterized in that** the binder c) in the dispersion a) is a polymeric organic binder.

11. Process according to at least one of Claims 1 to 10, **characterized in that** the ratio of the solid fraction (% by weight) of the binder c) to the solid fraction of the solid particles e) is greater than 1:2 and more preferably greater than 1:1.

12. Process according to at least one of Claims 1 to 11, **characterized in that** the dispersion a) is adjusted to a pH from 1 to 8 prior to application.

13. Process according to at least one of Claims 1 to 12, **characterized in that** the viscosity of the dispersion a) is from 10 to 1500 mPa·s, measured at a shear rate of 100 $s^{-1}$.

14. Process according to at least one of Claims 1 to 13, **characterized in that** the dispersing agent d) in the dispersion a) comprises organic solvents, water or mixtures of organic solvent and water.

15. Process according to at least one of Claims 1 to 14, **characterized in that** the dispersion a) additionally contains crosslinkers and/or surface-active substances and/or further additives.

16. Process according to Claim 15, **characterized in that** the further additives in the dispersion a) comprise ether-, lactone-, amide- or lactam-group-containing compounds, sulphones, sulphoxides, sugars, sugar derivatives, sugar alcohols, furan derivatives and/or di- or polyalcohols.

17. Process according to at least one of Claims 1 to 16, **characterized in that** the dispersion a) is adjusted to a pH of 4-8 in the case of a pH-sensitive dielectric.

18. Process according to at least one of Claims 1 to 17, **characterized in that** the fraction of particles e) in the dispersion a) amounts to at least 10% by weight of the solid fraction of the dispersion a), preferably at least 15% by weight.

19. Process according to at least one of Claims 1 to 18, **characterized in that**, in the dispersion a), the fraction of particles b) having a diameter of less than 700 nm, based on their solids content, amounts to at least 10% by weight and more preferably at least 15% by weight of the solids content of the dispersion.

20. Process according to at least one of Claims 1 to 19, **characterized in that** the solid particles e) in the dispersion a) have an average diameter of 1 μm to 10 μm and more preferably an average diameter of 1 μm to 5 μm.

21. Process according to at least one of Claims 1 to 20, **characterized in that** the solid particles e) in the dispersion a) have a d10 value of the diameter distribution of greater than 0.9 μm and a d90 value of less than 15 μm.

22. Process according to at least one of Claims 1 to 21, **characterized in that** the conductive material of the solid electrolyte (4) is a conductive polymer.

**23.** Process according to Claim 22, **characterized in that** the conductive polymer in the solid electrolyte (4) is a polythiophene, polypyrrole or polyaniline which are each optionally substituted.

**24.** Process according to Claim 23, **characterized in that** the conductive polymer in the solid electrolyte (4) is a polythiophene with recurring units of general formula (I) or formula (II) or recurring units of general formulae (I) and (II)

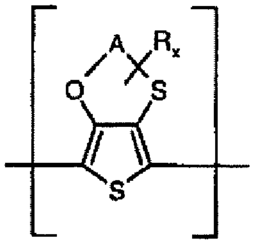 (I) 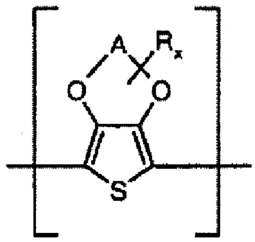 (II)

where the radicals A and R and the index x are each as defined in Claim 1.

**25.** Process according to Claim 24, **characterized in that** the conductive polymer in the solid electrolyte is poly(3,4-ethylenedioxythiophene).

**26.** Process according to at least one of Claims 1 to 25, **characterized in that** the solid electrolyte contains monomeric anions.

**27.** Process according to at least one of Claims 1 to 26, **characterized in that** the electrode material of the electrode body (2) comprises a valve metal or a compound with electrical properties comparable to those of a valve metal.

**28.** Process according to Claim 27, **characterized in that** the valve metal or the compound with electrical properties comparable to a valve metal comprises tantalum, niobium, aluminium, titanium, zirconium, hafnium, vanadium, an alloy or compound of at least one of these metals with other elements or NbO or an alloy or compound of NbO with other elements.

**29.** Process according to at least one of Claims 1 to 28, **characterized in that** the dielectric comprises an oxide of the valve metal or an oxide of the compound with electrical properties comparable to those of a valve metal.

**30.** Process according to at least one of Claims 1 to 29, **characterized in that** after application of the dispersion a) and formation of the electrically conductive polymeric outer layer the capacitor is optionally provided with further electrically conductive external contacts (6, 7, 8), optionally contacted and encapsulated.

**31.** Process according to at least one of Claims 1 to 30, **characterized in that** after application of the dispersion a) and formation of the polymeric outer layer the average layer thickness of the polymeric outer layer is 1-100 $\mu$m.

## Revendications

**1.** Procédé pour la production d'un condensateur électrolytique, dans lequel on applique, sur un corps de condensateur (1), comprenant au moins

- un corps d'électrode (2) poreux d'un matériau d'électrode,
- un diélectrique (3), qui recouvre la surface de ce matériau d'électrode,
- un électrolyte solide (4) contenant au moins un matériau électriquement conductible, qui recouvre la surface du diélectrique, totalement ou partiellement,

une dispersion a) qui contient au moins
des particules b) d'un polymère électriquement conductible, qui contiennent au moins une polyaniline le cas échéant substituée et/ou un polythiophène avec des unités répétitives de formule générale (I) ou de formule (II) ou des unités répétitives des formules générales (I) et (II),

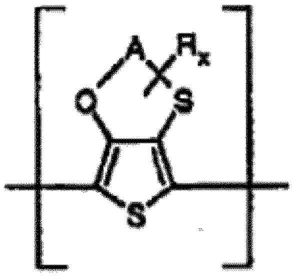 (I) 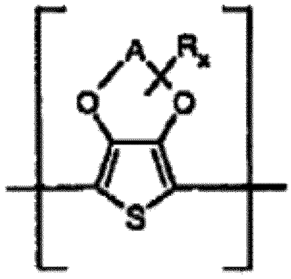 (II)

où

A représente un radical $C_1$-$C_5$-alkylène le cas échéant substitué,
R représente un radical $C_1$-$C_{18}$-alkyle linéaire ou ramifié, le cas échéant substitué, un radical $C_5$-$C_{12}$-cycloalkyle le cas échant substitué, un radical $C_6$-$C_{14}$-aryle le cas échéant substitué, un radical $C_7$-$C_{18}$-aralkyle le cas échéant substitué, un radical $C_1$-$C_4$-hydroxyalkyle le cas échéant substitué ou un radical hydroxyle,
x vaut un nombre entier de 0 à 8 et

pour le cas où plusieurs radicaux R sont liés à A, ceux-ci peuvent être identiques ou différents,
et un liant c) et un dispersant d),
et pour la formation d'une couche extérieure polymère électriquement conductible, le dispersant d) est le cas échéant au moins partiellement éliminé et/ou le liant c) est le cas échéant durci,
**caractérisé en ce que** la proportion de particules b) du polymère conductible dans la dispersion a) avec un diamètre inférieur à 700 nm représente une teneur en solides d'au moins 5% en poids de la teneur en solides de la dispersion, et **en ce qu'**en plus des composés b) à d) des particules solides e) présentant un diamètre dans la plage de 0,7 à 20 μm sont contenues dans la dispersion a), la proportion de particules solides e) dans la dispersion a) étant d'au moins 5% en poids de la proportion de solides de la dispersion a).

**2.** Procédé selon la revendication 1, **caractérisé en ce que** les particules b) du polymère conductible dans la dispersion a) présentent un diamètre moyen de 5 à 500 nm.

**3.** Procédé selon au moins l'une quelconque des revendications 1 à 2, **caractérisé en ce que** les particules solides e) sont des particules organiques ou inorganiques ou un mélange de celles-ci.

**4.** Procédé selon au moins l'une quelconque des revendications 1 à 3, **caractérisé en ce que** les particules solides e) sont à base de charges, de polymères électriquement conductibles ou de substances inorganiques.

**5.** Procédé selon la revendication 4, **caractérisé en ce que** les substances inorganiques sont la silice précipitée, la silice pyrogène ou des sols de silice.

**6.** Procédé selon la revendication 4, **caractérisé que** le polymère électriquement conductible est le poly(3,4-éthylènedioxythiophène).

**7.** Procédé selon au moins l'une quelconque des revendications 1 à 6, **caractérisé en ce que** le polythiophène des particules b) dans la dispersion a) est le poly(3,4-éthylènedioxythiophène).

**8.** Procédé selon au moins l'une quelconque des revendications 1 à 7, **caractérisé en ce que** la dispersion a) contient en outre au moins un anion polymère.

**9.** Procédé selon la revendication 8, **caractérisé en ce que** l'anion polymère est un anion d'un acide carboxylique ou sulfonique polymère, de préférence du poly(acide styrènesulfonique).

**10.** Procédé selon au moins l'une quelconque des revendications 1 à 9, **caractérisé en ce que** le liant c) contenu dans la dispersion a) est un liant organique polymère.

**11.** Procédé selon au moins l'une quelconque des revendications 1 à 10, **caractérisé en ce que** le rapport de la proportion de solides (% en poids) du liant c) à la proportion de solides des particules solides e) est supérieur à 1:2, de manière particulièrement préférée supérieur à 1:1.

**12.** Procédé selon au moins l'une quelconque des revendications 1 à 11, **caractérisé en ce que** la dispersion a) est réglée, avant l'application, à un pH de 1 à 8.

**13.** Procédé selon au moins l'une quelconque des revendications 1 à 12, **caractérisé en ce que** la viscosité de la dispersion a) est de 10 à 1500 mPa.s, mesurée à un taux de cisaillement de 100 $s^{-1}$.

**14.** Procédé selon au moins l'une quelconque des revendications 1 à 13, **caractérisé en ce que** la dispersion a) contient comme dispersant d) des solvants organiques, de l'eau ou des mélanges de solvant organique et d'eau.

**15.** Procédé selon au moins l'une quelconque des revendications 1 à 14, **caractérisé en ce que** la dispersion a) contient en outre des réticulants et/ou des substances tensioactives et/ou d'autres additifs.

**16.** Procédé selon la revendication 15, **caractérisé en ce que** la dispersion a) contient comme autres additifs des composés contenant des groupes éther, lactone, amide ou lactame, des sulfones, des sulfoxydes, des sucres, des dérivés de sucre, des alcools de sucre, des dérivés de furanne et/ou des dialcools ou des polyalcools.

**17.** Procédé selon au moins l'une quelconque des revendications 1 à 16, **caractérisé en ce que** la dispersion a) est réglée à un pH de 4-8 dans le cas d'un diélectrique sensible au pH.

**18.** Procédé selon au moins l'une quelconque des revendications 1 à 17, **caractérisé en ce que** la proportion de particules e) dans la dispersion a) représente au moins 10% en poids de la proportion de solides de la dispersion a), de préférence au moins 15% en poids.

**19.** Procédé selon au moins l'une quelconque des revendications 1 à 18, **caractérisé en ce que** dans la dispersion a), la proportion de particules b) avec un diamètre inférieur à 700 nm, par rapport à sa teneur en solides est d'au moins 10% en poids, de manière particulièrement préférée d'au moins 15% en poids de la teneur en solides de la dispersion.

**20.** Procédé selon au moins l'une quelconque des revendications 1 à 19, **caractérisé en ce que** les particules solides e) dans la dispersion a) présentent un diamètre moyen de 1 μm à 10 μm, de manière particulièrement préférée un diamètre moyen de 1 μm à 5 μm.

**21.** Procédé selon au moins l'une quelconque des revendications 1 à 20, **caractérisé en ce que** les particules solides e) dans la dispersion a) présentent une valeur d10 de la distribution des diamètres supérieure à 0,9 μm et une valeur d90 inférieure à 15 μm.

**22.** Procédé selon au moins l'une quelconque des revendications 1 à 21, **caractérisé en ce que** le matériau conductible de l'électrolyte solide (4) est un polymère conductible.

**23.** Procédé selon la revendication 22, **caractérisé en ce que** le polymère conductible contenu dans l'électrolyte solide (4) est un polythiophène, un polypyrrole ou une polyaniline, qui est le cas échéant substitué(e).

**24.** Procédé selon la revendication 23, **caractérisé en ce que** le polymère conductible contenu dans l'électrolyte solide (4) est un polythiophène avec des unités répétitives de formule générale (I) ou de formule (II) ou des unités répétitives des formules générales (I) et (II),

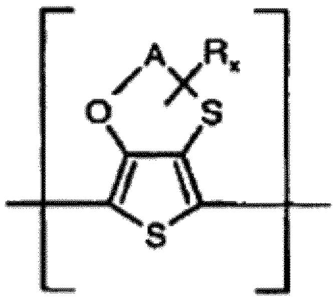 (I)

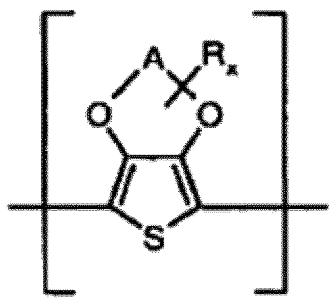 (II)

les radicaux A et R et l'indice x ayant la signification mentionnée dans la revendication 1.

**25.** Procédé selon la revendication 24, **caractérisé en ce que** le polymère conductible contenu dans l'électrolyte solide est le poly(3,4-éthylènedioxythiophène).

**26.** Procédé selon au moins l'une quelconque des revendications 1 à 25, **caractérisé en ce que** l'électrolyte solide contient des anions monomères.

**27.** Procédé selon au moins l'une quelconque des revendications 1 à 26, **caractérisé en ce qu'**il s'agit, pour le matériau d'électrode du corps d'électrode (2) d'un métal de soupape ou d'un composé présentant des propriétés électriques comparables à celles d'un métal de soupape.

**28.** Procédé selon la revendication 27, **caractérisé en ce qu'**il s'agit, pour le métal de soupape ou le composé présentant des propriétés électriques comparables à celles d'un métal de soupape de tantale, de niobium, d'aluminium, de titane, de zirconium, d'hafnium, de vanadium, d'un alliage ou d'un composé d'au moins un de ces métaux avec d'autres éléments ou de NbO ou d'un alliage ou d'un composé de NbO avec d'autres éléments.

**29.** Procédé selon au moins l'une quelconque des revendications 1 à 28, **caractérisé en ce qu'**il s'agit, pour le diélectrique, d'un oxyde du métal de soupape ou d'un oxyde du composé présentant des propriétés électriques comparables à celles d'un métal de soupape.

**30.** Procédé selon au moins l'une quelconque des revendications 1 à 29, **caractérisé en ce qu'**après l'application de la dispersion a) et la formation de la couche extérieure polymère électriquement conductible, le condensateur est le cas échéant pourvu d'autres contacts extérieurs électriquement conductibles (6, 7, 8), le cas échéant mis en contact et encapsulé.

**31.** Procédé selon au moins l'une quelconque des revendications 1 à 30, **caractérisé en ce qu'**après l'application de la dispersion a) et la formation de la couche extérieure polymère l'épaisseur moyenne de la couche extérieure polymère est de 1-100 $\mu$m.

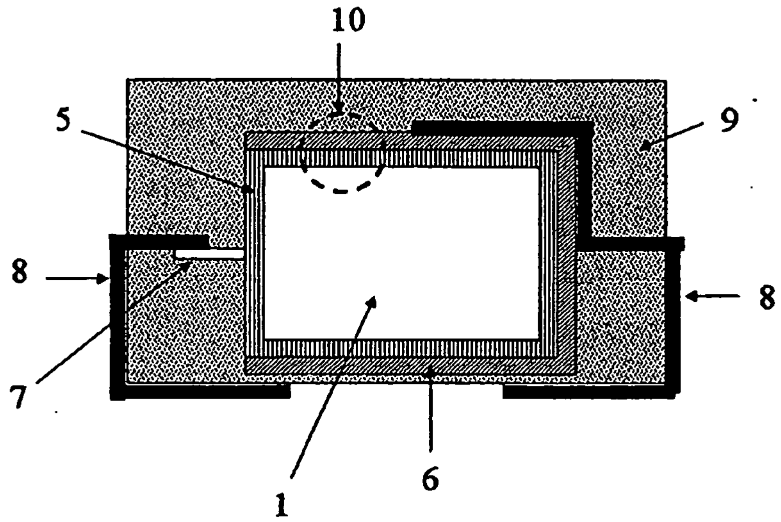


Fig. 1

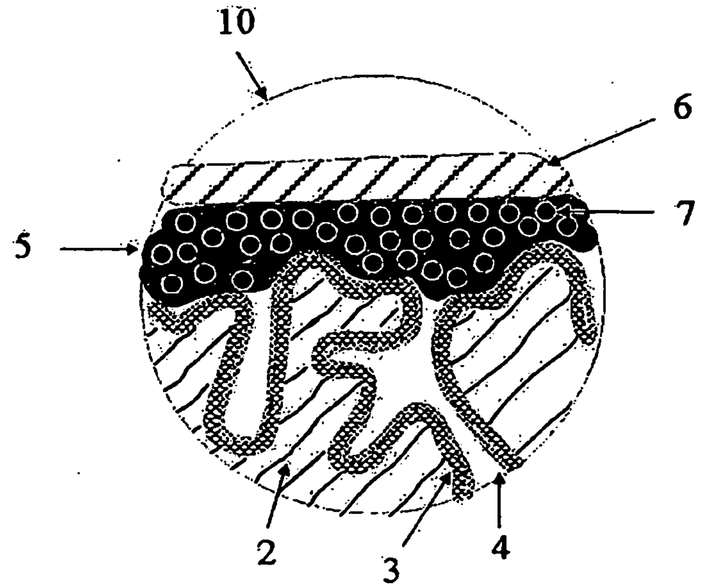


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 340512 A
- JP 2003188052 A
- EP 637043 A
- JP 2001102255 A
- JP 2001060535 A
- US 6001281 P
- EP 1524678 A
- EP 440957 A


### In der Beschreibung aufgeführte Nicht-Patentliteratur


- Methoden der organischen Chemie. **HOUBEN WEYL.** Makromolekulare Stoffe. 1987, vol. E 20, 1141
- **L. GROENENDAAL ; F. JONAS ; D. FREITAG ; H. PIELARTZIK ; J. R. REYNOLDS.** *Adv. Mater.,* 2000, vol. 12, 481-494
- **P. BLANCHARD ; A. CAPPON ; E. LEVILLAIN ; Y. NICOLAS ; P. FRÈRE ; J. RONCALI.** *Org. Lett.,* 2002, vol. 4 (4), 607-609
- *J. Polym. Sc. Part A Polymer Chemistry,* 1988, vol. 26, 1287
- **Y. KUDOH et al.** *Journal of Power Sources,* 1996, vol. 60, 157-163